# EUROPEAN PATENT SPECIFICATION

(11) **EP 4 480 776 B1**
(45) Date of publication and mention of the grant of the patent: **10.06.2026**
(21) Application number: 22942508.7
(22) Date of filing: 15.12.2022
(51) Int. Cl.: G05D 1/227, B60W 50/02, H04W 4/44, G08G 1/09

(54) **REMOTE DRIVING CONTROL METHOD AND APPARATUS, COMPUTER DEVICE, AND STORAGE MEDIUM**
VERFAHREN UND VORRICHTUNG ZUR FERNSTEUERUNG, COMPUTERVORRICHTUNG UND SPEICHERMEDIUM
PROCÉDÉ ET APPAREIL DE COMMANDE DE CONDUITE À DISTANCE, DISPOSITIF INFORMATIQUE ET SUPPORT DE STOCKAGE

(30) Priority: 17.05.2022 CN 202210534627
(43) Date of publication of application: 25.12.2024
(73) Proprietor: Tencent Technology (Shenzhen) Company Limited, Shenzhen, Guangdong 518057 (CN)
(72) Inventor: ZHANG, Yipeng, Shenzhen, Guangdong 518057 (CN); LEI, Yixue, Shenzhen, Guangdong 518057 (CN)
(74) Representative: Nederlandsch Octrooibureau
(86) International application number: PCT/CN2022/139303
(87) International publication number: WO 2023/221488

(56) References cited:
- CN-A- 105 897 811
- CN-A- 111 186 446
- CN-A- 111 404 773
- CN-A- 111 884 939
- CN-A- 111 988 164
- CN-A- 113 611 098
- US-A1- 2019 383 624
- US-A1- 2021 377 707
- ANONYMOUS: "Tele-operated driving (ToD): System requirements analysis and architecture", 15 September 2021 (2021-09-15), pages 1 - 78, XP093272256, Retrieved from the Internet <URL:https://5gaa.org/content/uploads/2021/09/5GAA_ToD_System_Requirements_Architecture_TR.pdf>
- ANONYMUS: "5GS Enhancements for Providing Predictive QoS in C-V2X", 31 May 2020 (2020-05-31), pages 1 - 60, XP093272433, Retrieved from the Internet <URL:https://5gaa.org/content/uploads/2020/05/5GAA_A-200055_eNESQO_TR_final.pdf>

## Description

### RELATED APPLICATION

This application claims priority to Chinese Patent Application No. 202210534627.X, filed on May 17, 2022 and entitled "REMOTE DRIVING CONTROL METHOD AND APPARATUS, COMPUTER DEVICE, AND STORAGE MEDIUM".

### FIELD OF THE TECHNOLOGY

Aspects described herein relates to the field of remote driving technologies, and in particular, to a remote driving control method and apparatus, a computer device, and a storage medium.

### BACKGROUND OF THE DISCLOSURE

With the development of driving technologies, remote driving technology has been proposed. Remote driving technology includes technology for remotely operating a vehicle by a driver manually so that the vehicle safely travels on a road. During remote driving, information needs to be transmitted between a remotely driven vehicle (that is, a remotely operated vehicle) and a remote driving server based on a network. For example, the remotely driven vehicle needs to transmit road environment information of the remotely driven vehicle side to the remote driving server through the network, and the remote driving server needs to transmit vehicle control information (such as a vehicle control signal) to the remotely driven vehicle through the network.

Implementation of remote driving has high requirements on network quality between the remotely driven vehicle and the remote driving server. However, the network is often unstable. Once a sudden change occurs in the network quality, information transmitted between the remotely driven vehicle and the remote driving server may be lost or delayed, leading to a safety hazard in a travel process of the remotely driven vehicle. Based on this, improving travel safety of the remotely driven vehicle becomes a research hotspot.
US 2021/377707 A1 discloses controlling a communication link used for tele-operating a transportation vehicle. The method includes obtaining information related to a predicted quality of service (pQoS) for the communication link between the transportation vehicle and a tele-operator of the transportation vehicle and selecting an operating mode for tele-operating the transportation vehicle from a group of operating modes based on the information related to the pQoS, the group of operating modes having two or more operating modes differing at least in a speed limit for the transportation vehicle.
"5GS Enhancements for Providing Predictive QoS in C-V2X",discloses the development from the 5G Automotive Association by Working Group System Architecture and Solution Development for 5GS Enhancements for Providing Predictive QoS in C-V2X.
"Tele-operated driving (ToD): System requirements analysis and architecture" discloses ToD system requirements and architecture in general based on the development from the 5G Automotive Association.

### SUMMARY

The present invention is according to the claims.

### BRIEF DESCRIPTION OF THE DRAWINGS

FIG. 1 is a diagram of a system architecture of a remote driving system according to an embodiment of this application.
FIG. 2 is a diagram of a remote driving procedure according to an embodiment of this application.
FIG. 3 is a schematic flowchart of a remote driving control method according to an embodiment of this application.
FIG. 4 is a diagram of obtaining network quality prediction information according to an embodiment of this application.
FIG. 5 is another diagram of obtaining network quality prediction information according to an embodiment of this application.
FIG. 6 is a diagram of an example state sequence according to an embodiment of this application.
FIG. 7 is a diagram of another example state sequence according to an embodiment of this application.
FIG. 8 is a diagram of an example process for adjusting a driving control policy according to an embodiment of this application.
FIG. 9 is a diagram of example execution logic of a remote driving server according to an embodiment of this application.
FIG. 10 is a schematic flowchart of an example network quality rise control policy according to an embodiment of this application.
FIG. 11 is a schematic flowchart of an example network quality fall control policy according to an embodiment of this application.
FIG. 12 is a diagram of example execution logic of entering a third state according to an embodiment of this application.
FIG. 13 is a diagram of an example structure of a remote driving control apparatus according to an embodiment of this application.
FIG. 14 is a diagram of an example structure of a computer device according to an embodiment of this application.

### DESCRIPTION OF EMBODIMENTS

The following clearly and completely describes technical solutions in embodiments of this application with reference to accompanying drawings in the embodiments of this application.

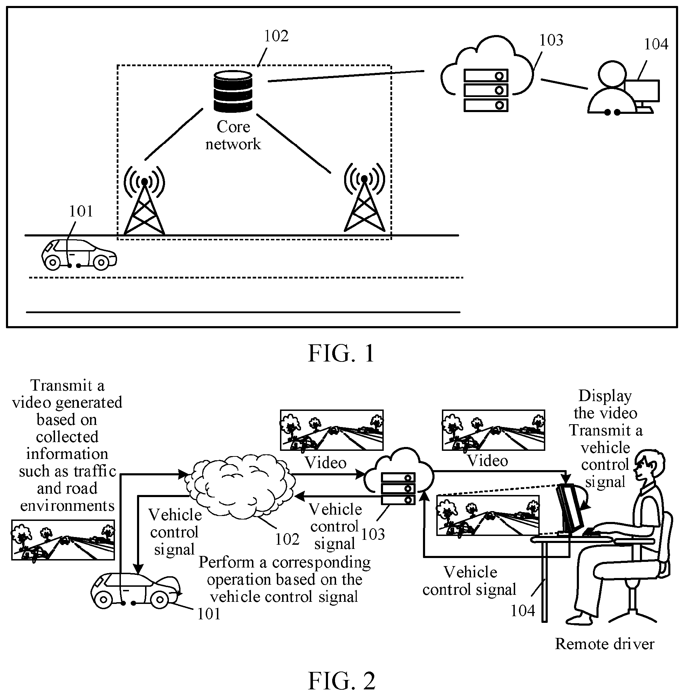

Aspects described herein relate to a remote driving system. As shown in FIG. 1, a remote driving system may include a remotely driven vehicle 101, a cellular network 102, a remote driving server 103, and a remote driving controller 104. The remotely driven vehicle 101 and the remote driving server 103 perform data transmission through the cellular network 102. The cellular network 102 herein, which may also be referred to as a mobile network, may be a mobile communications hardware architecture. The cellular network 102 may specifically include, but is not limited to, a wireless network, a core network, a transport network, or the like. A cellular network type is not limited in the embodiments of this application. For example, the cellular network type may be a 5th generation (5G) mobile communications technology network, a 4th generation (4G) mobile communications technology network, a global system for mobile communications (GSM) network, a code division multiple access (CDMA) network, a frequency division multiple access (FDMA) network, or a time division multiple access (TDMA) network.

The remotely driven vehicle 101 is a remotely operated vehicle, on which a camera, a sensor, and the like for collecting road environment information may be configured. In addition, one or more clients, such as an audio/video playing client, a communications client, a remote control client, or a data acquisition client, may be installed and run in the remotely driven vehicle 101. These examples are not limiting. The remote driving server 103 may be an independent physical server, or may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence (AI) platform. These examples are not limiting. The remote driving controller 104, which may also be referred to as a remote driving simulator or a remote driving simulation pod or the like, may be an apparatus operated by a remote driver (that is, a remote operation object), on which apparatuses such as a screen and an operation component for generating a vehicle control signal may be configured.

As shown in FIG. 2, an example process for implementing remote driving based on the remote driving system may include the following: The remotely driven vehicle 101 may collect traffic and road environment information around the vehicle through the camera, the sensor, and the like on the vehicle, generate a corresponding video according to the collected information, and transmit the corresponding video to the remote driving server 103 based on the cellular network 102. Correspondingly, the remote driving server 103 may display the received video on the screen of the remote driving simulator 104, so that the remote driver can determine a real-time traffic environment around the vehicle based on the video displayed on the screen, and operate the operation component on the remote driving simulator 104 to transmit a vehicle control signal including steering, accelerating, braking, or the like. Then, the remote driving server 103 may transmit, to the remotely driven vehicle 101 through the cellular network 102, the vehicle control signal transmitted by the remote driving simulator 104, so that the remotely driven vehicle 101 may perform a corresponding operation based on the vehicle control signal. In this way, the remotely driven vehicle 101 is controlled to safely travel according to an intended route and state. In the embodiments of the present disclosure including the embodiments of both the claims and the specification (hereinafter referred to as "all embodiments of the present disclosure"), the remotely driven vehicle 101 further transmits a collected vehicle parameter to the remote driving simulator 104, so that the remote driver learns a status of the remotely driven vehicle 101. The vehicle parameter may include a travel status parameter (such as a velocity parameter or a direction parameter), a vehicle basic parameter (such as a fuel capacity, a travel duration, or tire pressure), and the like.

In the remote driving system, environment information such as a video and vehicle control information such as a vehicle control signal need to be transmitted between the remotely driven vehicle and the remote driving server through the network, which has high requirements on network quality (such as latency, bandwidth, and reliability of the network), for example, an uplink bandwidth requirement of 36 megabits per second (Mbps), a latency requirement of 100 milliseconds (ms) for uplink and 20 ms for downlink, and a reliability requirement of 99% for uplink and 99.999% for downlink. However, in actual use using existing technologies, even using network optimization techniques, it is still difficult for cellular networks such as 4G or 5G to meet the network quality requirements of the remote driving system 100% in space and time. When there occurs a sudden situation such as disconnection of a network signal between the remotely driven vehicle and the remote control end (e.g.,, the remote driving server) or degradation of the network quality, if the remote driving system does not have a reliable safeguard, the remotely driven vehicle cannot be controlled in time due to failure to timely transmit a vehicle control signal or a control instruction to the remotely driven vehicle, possibly resulting in the remotely driven vehicle being out of control; or the remotely driven vehicle cannot be controlled in time due to failure to transmit a video to the remote driving server in time so that the remote driver cannot transmit a vehicle control signal according to the video in time, possibly resulting in the remotely driven vehicle being out of control. Once the remotely driven vehicle is out of control, a safety hazard to the remotely driven vehicle, a passenger on board the vehicle, and/or another vehicle and a pedestrian around the remotely driven vehicle may result.

To avoid problems resulting from a sudden change in network quality, such as the remote driving system or the remote driver being left with insufficient response time, due to a video transmitted during remote driving being frozen or lost, or vehicle control information (such as a vehicle control signal or a control instruction) being delayed/lost, which may result in the remotely driven vehicle being out of control or the like, an embodiment of this application proposes a remote driving control method based on predicted network quality, to greatly improve travel safety of the remotely driven vehicle. The remote driving control method may be applied to a remote driving scenario based on a cellular network, and may also be applied to a remote driving scenario based on another network. This is not limiting.

For example, aspects of a remote driving control method include: Before network quality between a remotely driven vehicle and a remote driving server changes, a spatial change and a network quality change within a target time period in the future (such as several seconds in the future or several minutes in the future) may be predicted in advance. Then, based on predicted network quality corresponding to a target time point at which the network quality changes within the target time period, a driving control policy (or referred to as a vehicle control policy), such as sensor transmission or vehicle control, of the remotely driven vehicle may be adjusted before the network quality actually changes, so that the remotely driven vehicle is controlled according to an adjusted driving control policy.

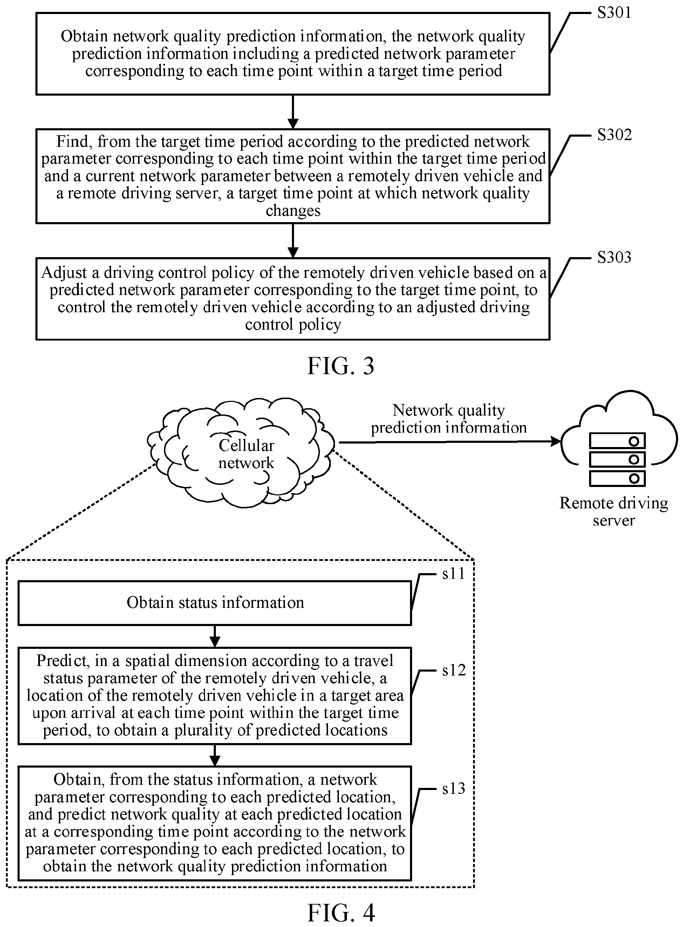

According to some aspects, the remote driving control method proposed in this embodiment of this application may be performed by the remote driving server in the remote driving system, or may be performed by the remotely driven vehicle in the remote driving system, or may be performed jointly by the remote driving server and the remotely driven vehicle in the remote driving system. This is not limiting. A remote driving control method proposed in this embodiment of this application is described below with reference to a flowchart shown in FIG. 3 by using an example where the method is performed by the remote driving server. As shown in FIG. 3, the remote driving control method may include S301 to S303:

S301: Obtain network quality prediction information.

The network quality prediction information is obtained by predicting network quality between the remotely driven vehicle and the remote driving server within a target time period. In all embodiments of the present disclosure, the network quality prediction information may include a predicted network parameter corresponding to each time point within the target time period. The predicted network parameter refers to a network parameter obtained by predicting the network quality between the remotely driven vehicle and the remote driving server upon arrival at a corresponding time point. The time point may be a future time point. The predicted network parameter may reflect a change in the network quality between the remotely driven vehicle and the remote driving server within the target time period. The target time period may be a time period in the future (such as several seconds in the future or several minutes in the future after a current moment). For example, the predicted network parameter may reflect an expected change in the network quality between the remotely driven vehicle and the remote driving server within 5 seconds (s) in the future. In one or more arrangements, the network parameter in this embodiment of this application may include at least one of network bandwidth, network latency, and data transmission reliability (referred to as reliability for short).

In all embodiments of the present disclosure, the network quality prediction information may be obtained by performing network quality prediction based on status information of a target area in which the remotely driven vehicle is located. The status information is obtained by performing an acquisition operation on one or more parameters of a network parameter, a vehicle parameter, and an environmental parameter in the target area in which the remotely driven vehicle is located.

In an example, operation S301 may further include the following sub-operations (s11 to s13):
s11: Obtain the status information. The status information includes at least a network parameter obtained by performing network collection at each location in the target area in which the remotely driven vehicle is located and a vehicle parameter of the remotely driven vehicle. The vehicle parameter may include at least a travel status parameter, and the travel status parameter may include, but is not limited to, a velocity parameter, a direction parameter, and the like. The travel status parameter of the vehicle may be configured for predicting a travel trajectory of the corresponding vehicle to determine a location of the corresponding vehicle at each time point in the future. In all embodiments of the present disclosure, the vehicle parameter may further include a client parameter for indicating network usage of each client in the vehicle, and the like. The client parameter of the vehicle may be configured for predicting network usage of the vehicle, to determine a network resource required to be consumed by the corresponding vehicle at each time point in the future. The target area is an area corresponding to the following predicted travel trajectory, which is obtained by predicting an area that can be reached by the remotely driven vehicle within the target time period. For example, the target area may be an area that can be reached by the remotely driven vehicle within 5s in the future.

In all embodiments of the present disclosure, considering that network quality between a single vehicle and the remote driving server may be affected by network contention between geographically close vehicles, and the network quality may be affected by an environmental factor such as weather, in this embodiment of this application, parameter acquisition may be further performed on another vehicle in the target area and an environment of the target area, to improve comprehensiveness of the status information, thereby improving accuracy of subsequent network quality prediction. In this case, the status information may further include at least one of a vehicle parameter of another vehicle other than the remotely driven vehicle in the target area, an environmental parameter of the target area, and the like. The environmental parameter may include road condition, weather condition, lane information, transport rule, or other parameters.

s12: Predict, in a spatial dimension according to the travel status parameter of the remotely driven vehicle, a location of the remotely driven vehicle in the target area upon arrival at each time point within the target time period, to obtain a plurality of predicted locations. For example, a trajectory prediction model may be invoked to predict a travel trajectory of the remotely driven vehicle within the target time period in a spatial dimension according to the travel status parameter of the remotely driven vehicle, to determine a location of the remotely driven vehicle within the target area upon arrival at each time point within the target time period according to the predicted travel trajectory, thereby obtaining a plurality of predicted locations. One predicted location corresponds to one time point, and predicted locations corresponding to any two time points may be the same or different. This is not limited. For example, the target time period includes five time points, where each time point corresponds to one predicted location, and the five predicted locations are on the predicted travel trajectory in chronological order.

The trajectory prediction model may be obtained by performing model training based on a machine learning/deep learning technology or the like by using sample data. The machine learning, as a core of AI, is a fundamental approach to making a computer intelligent, which may be understood as a multi-field cross-discipline, involving a plurality of disciplines such as a probability theory, statistics, an approximation theory, convex analysis, and an algorithmic complexity theory, and specializing in how the computer simulates or implements human learning behavior to obtain new knowledge or skills and reorganize an existing knowledge structure to continuously improve performance of the computer. The machine learning/deep learning technology may include a plurality of technologies such as an artificial neural network, supervised, and unsupervised. The supervised, short for supervised learning, is a machine learning task of inferring a function (such as a model parameter) from a set of labeled training data. The unsupervised, short for unsupervised learning, is a machine learning task of inferring a function by resolving various problems in mode recognition work (such as object recognition work) based on sample data (not labeled) of an unknown class. The trajectory prediction model in this embodiment of this application may be trained in a supervised learning manner or an unsupervised learning manner. This is not limited.

s13: Obtain, from the status information, a network parameter corresponding to each predicted location, and predict network quality at each predicted location at a corresponding time point according to the network parameter corresponding to each predicted location, to obtain the network quality prediction information. Network quality related to communication performed between the remotely driven vehicle and the remote driving server at any time corresponds to network quality at a location of the remotely driven vehicle at the given time. Therefore, the predicting network quality at each predicted location at a corresponding time point may be understood as predicting the network quality between the remotely driven vehicle and the remote driving server upon arrival at the corresponding time point.

In an example, when operation s13 is performed, for any predicted location, a network quality prediction model may be invoked to predict network quality at the any predicted location at a corresponding time point according to a network parameter corresponding to the any predicted location, to obtain a predicted network parameter corresponding to the time point corresponding to the any predicted location. For example, a predicted location corresponding to the first second within the target time period is a location A. In this case, the network quality prediction model may be invoked to predict network quality at the location A at the first second in the future according to a network parameter corresponding to the location A, to obtain a predicted network parameter corresponding to the first second. The network quality prediction model may be obtained by performing model training based on a machine learning/deep learning technology or the like by using sample data.

In all embodiments of the present disclosure, the status information further includes: a vehicle parameter of another vehicle other than the remotely driven vehicle in the target area and an environmental parameter of the target area. In this case, when operation s13 is performed, for any predicted location, network quality at the any predicted location at a corresponding time point may be predicted according to a vehicle parameter of each vehicle, the environmental parameter, and a network parameter corresponding to the predicted location that are in the status information, to obtain a predicted network parameter corresponding to the time point corresponding to the predicted location. For example, the network quality at the predicted location at the corresponding time point may be predicted according to a client parameter in the vehicle parameter of each vehicle, the environmental parameter, and the network parameter corresponding to the predicted location that are in the status information. Alternatively, for any predicted location, a nearby location to the predicted location (that is, a location having a distance to the predicted locations less than a threshold) may be determined from the target area. Next, a traveling trajectory of each vehicle may be predicted according to a travel status parameter in the vehicle parameter of each vehicle in the status information, and a vehicle at the nearby location upon arrival at a time point corresponding to the predicted location may be determined according to the traveling trajectory of each vehicle. Then, network quality at the predicted location at the corresponding time point may be predicted according to a client parameter in the vehicle parameter of each vehicle at the nearby location, a network parameter corresponding to the nearby location, the environmental parameter, and a network parameter corresponding to the predicted location.

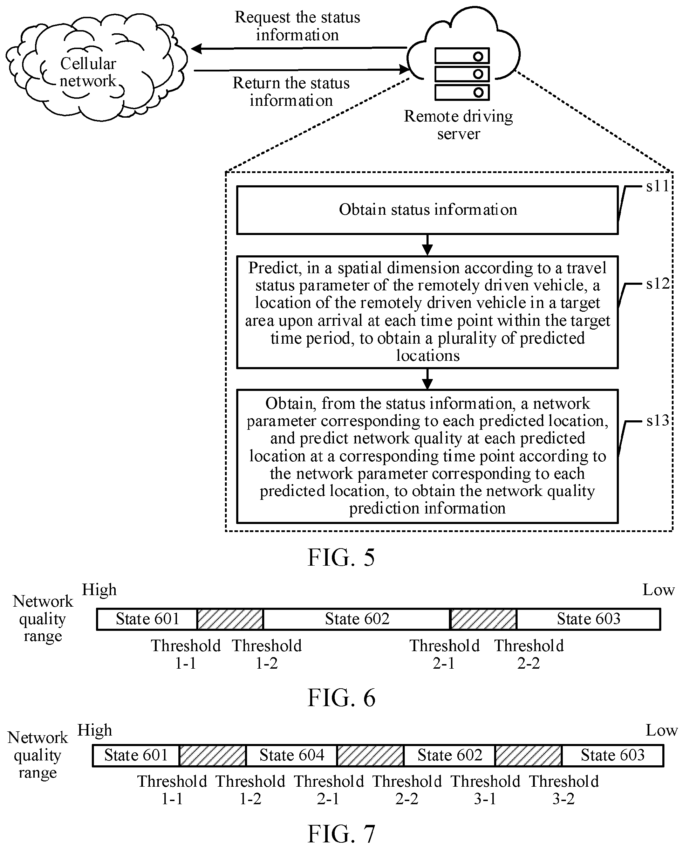

In the prediction procedure shown in operations s11 to s13, the network quality prediction information may be obtained by performing network quality prediction by the core network or another network in the cellular network. In this case, when performing operation S301, the remote driving server may obtain the network quality prediction information from the cellular network, as shown in FIG. 4. Alternatively, the network quality prediction information may be obtained by performing network quality prediction by the remote driving server. In this case, when performing operation S301, the remote driving server may request the cellular network to transmit the status information, and perform operations s11 to s13 based on the status information returned by the cellular network to obtain the network quality prediction information, as shown in FIG. 5. This is not limited.

In this embodiment of this application, the network quality prediction information is obtained from two dimensions of a predicted location and a predicted network parameter that correspond to the remotely driven vehicle, which comprehensively considers various states of a predicted network quality change, so that a driving control policy of the remotely driven vehicle can be adjusted at an accurate location and time, thereby improving control accuracy and safety of control over the remotely driven vehicle.

S302: Find, from the target time period according to the predicted network parameter corresponding to each time point within the target time period and a current network parameter between the remotely driven vehicle and the remote driving server, a target time point at which the network quality changes.

The current network parameter is a network parameter between the remotely driven vehicle and the remote driving server when the network quality prediction is performed. For example, if the network quality prediction is performed at 10:15:10, the current network parameter is a network parameter between the remotely driven vehicle and the remote driving server at 10:15:10.

In an example, the remote driving server may sequentially traverse each time point within the target time period in chronological order, and determine, according to a predicted network parameter at a current traversed time point and the current network parameter, whether the network quality changes at the current traversed time point. If the network quality changes at the current traversed time point, the current traversed time point may be determined as the target time point, and the traversal stops. If the network quality does not change at the current traversed time point, traversal of the target time period continues until all the time points within the target time period are traversed, or until the target time point is found. Accordingly, if there are at least two time points at which the network quality changes within the target time period, the target time point is a time point arriving earliest of the at least two time points. That is, if the network quality changes at the fifth second and the eighth second time points within the target time period, the target time point is identified as the fifth second within the target time period.

An example implementation of determining, according to a predicted network parameter at a current traversed time point and the current network parameter, whether the network quality changes at the current traversed time point may include: If any network parameter includes at least two of network bandwidth in a bandwidth dimension, network latency in a latency dimension, and reliability in a reliability dimension, it may be detected whether two parameters in the same parameter dimension are the same in the predicted network parameter at the current traversed time point and the current network parameter. If two parameters in at least one parameter dimension are different, it is determined that the network quality changes at the current traversed time point; otherwise, it is determined that the network quality does not change at the current traversed time point. For example, if network bandwidth in the predicted network parameter at the current traversed time point is different from network bandwidth in the current network parameter, while parameters in all other parameter dimensions are the same, it may be determined that the network quality changes at the current traversed time point. As a result, the current traversed time point is identified as the target time point.

Alternatively, another specific implementation of determining, according to a predicted network parameter at a current traversed time point and the current network parameter, whether the network quality changes at the current traversed time point may include the following: Predicted network quality at the current traversed time point is determined according to the predicted network parameter at the current traversed time point. Current network quality is determined according to the current network parameter. A manner of determining corresponding network quality according to any network parameter may include performing weighted summation on parameters in the any network parameter to obtain the corresponding network quality. Then, a comparison is performed to determine whether the predicted network quality at the current traversed time point is the same as the current network quality. If the predicted network quality at the current traversed time point is different from the current network quality, it is determined that the network quality changes at the current traversed time point, that is, the current traversed time point is the target time point. If the predicted network quality at the current traversed time point is the same as the current network quality, it is determined that the network quality does not change at the current traversed time point, and the traversal continues.

S303: Adjust a driving control policy of the remotely driven vehicle based on a predicted network parameter corresponding to the target time point, to control the remotely driven vehicle according to an adjusted driving control policy.

In an example, due to an increase in network latency or a decrease in reliability, a vehicle status such as a velocity and a travel direction of the controlled vehicle (that is, the remotely driven vehicle) and information such as a video might not be able to be transmitted to the remote driving control side within a specified time, so that the remote driver cannot timely perceive the vehicle status and a surrounding environment. As a result, the remote driver might not be able to control the remote driving simulator to transmit vehicle control information such as a vehicle control signal or instruction, or vehicle control information transmitted by the remote driving simulator might not reach the controlled vehicle within a specified time, resulting in the controlled vehicle failing to respond quickly. Therefore, a velocity, an acceleration, a steering angle, a steering angular velocity of the vehicle need to be controlled within ranges before the network quality degrades, to control transverse and longitudinal motion statuses of the remotely driven vehicle. An accelerator opening and the steering angular velocity may be respectively configured for controlling a longitudinal acceleration and a yaw angular velocity of the remotely driven vehicle. The two parameters may affect stability of the remotely driven vehicle. For a predicted network quality change (such as an increase in network latency), a danger caused by a sudden change in the vehicle status can be avoided by limiting a vehicle control parameter such as the accelerator opening or the steering angular velocity. An unsafe travel distance of the remotely driven vehicle over which video feedback might not be able to be obtained due to latency can be reduced by limiting a vehicle control parameter such as a maximum vehicle velocity or a maximum steering wheel angle, to improve travel safety of the remotely driven vehicle.

Based on this, in this embodiment of this application, a plurality of operating states may be configured for the remotely driven vehicle, and an adapted network quality range may be set for each operating state. Accordingly, the driving control policy may be adjusted based on the plurality of operating states. A maximum value of the vehicle control parameter of the remotely driven vehicle varies in different operating states. Moreover, the plurality of operating states may form a state sequence, a lower limit of a network quality range to which an operating state in the state sequence is adapted being greater than or equal to an upper limit of a network quality range to which a next operating state is adapted. For example, with reference to FIG. 6, the plurality of operating states may include a first state 601, a second state 602, and a third state 603. A lower limit (which may be represented by a threshold 1-1) of a network quality range to which the first state 601 is adapted is greater than or equal to an upper limit (which may be represented by a threshold 1-2) of a network quality range to which the second state 602 is adapted, and a lower limit (which may be represented by a threshold 2-1) of the network quality range to which the second state 602 is adapted being greater than or equal to an upper limit (which may be represented by a threshold 2-2) of a network quality range to which the third state 603 is adapted. In this way, the state sequence corresponding to the operating states may be formed.
(1) In the first state 601, a parameter that can be inputted by the remote driving simulator is has a high upper limit, that is, a maximum value of a vehicle control parameter, such as an accelerator opening, a maximum vehicle velocity, a maximum steering angle, or a steering angular velocity, inputted by the remote driver may be a threshold. The threshold is a normal value (that is, a maximum value) supported by the remote driving system. It can be learned that in the first state 601, the vehicle control parameter for the remotely driven vehicle is set to a high indicator, and the first status 601 may be configured for indicating that the vehicle control parameter for the remotely driven vehicle is allowed to be adjusted to the threshold.
(2) In the second state 602, a parameter that can be inputted by the remote driving simulator has a low upper limit (or lower upper limit as compared to the first state 601), that is, a maximum value of a vehicle control parameter, such as an accelerator opening, a maximum vehicle velocity, a maximum steering angle, or a steering angular velocity, inputted by the remote driver is a limit. The limit is a value that is set according to an empirical value and less than the normal value (or threshold) supported by the remote driving system. It can be learned that in the second state 602, the vehicle control parameter for the remotely driven vehicle is set to a low indicator, and the second state 602 may be configured for indicating that the vehicle control parameter for the remotely driven vehicle is allowed to be adjusted to the limit, the limit being less than the threshold.
(3) In the third state 603, the remote driving simulator can directly prompt the remote driver to control the remotely driven vehicle to park. It can be learned that the third state 603 may be configured for indicating to control the remotely driven vehicle to park. In all embodiments of the present disclosure, considering that parking includes emergency parking and parking in a safe area, the third state may further include two sub-states: a first sub-state and a second sub-state. In the first sub-state, the remote driving simulator may prompt the remote driver to control the remotely driven vehicle to park in a road safety area (such as an emergency parking strip or an emergency parking area of a road). This operation takes some time. In the second sub-state, the remote driving simulator may prompt the remote driver to control the remotely driven vehicle to perform emergency parking at a current location. This operation takes less time. The third state 603 is further divided according to predicted network quality, so that an unsafe travel distance of the remotely driven vehicle can be further reduced, to further improve driving safety of the remotely driven vehicle.

The foregoing merely lists the accelerator opening, the maximum vehicle velocity, the maximum steering angle, and the steering angular velocity as example adjustable vehicle control parameters, and the adjustable vehicle control parameters may not be limited to the four parameters, and in a complex remote driving system, a vehicle may be further controlled by controlling parameters such as a gear and brake pressure. Moreover, the foregoing merely describes an example of specific content of the plurality of operating states, which are also not limited. For example, the vehicle control parameter is simply divided into high and low parameter groups, so that the plurality of configured operating states include the first state 601 and the second state 602. Alternatively, in another embodiment, the vehicle control parameter may not be ranked. In such arrangements, the plurality of operating states may include the first state 601 and the third state 603, or include the second state 602 and the third state 603, or the like. Alternatively, in another embodiment, the vehicle control parameter may be divided into parameter groups at more levels or ranks depending on an actual situation, so that the plurality of operating states include more states to indicate a plurality of cases of the maximum value of the vehicle control parameter.

For example, with reference to FIG. 7, the vehicle control parameter may be divided into high, intermediate, and low parameter groups, so that in addition to the first state 601 and the second state 602, the plurality of configured operating states may include a fourth state 604 for setting the vehicle control parameter to an intermediate indicator. The fourth state 604 may be configured for indicating that the vehicle control parameter for the remotely driven vehicle is allowed to adjust to an intermediate value. The intermediate value is less than the threshold indicated by the first state 601 and greater than the limit indicated by the second state 602. In this case, a lower limit (which may be represented by a threshold 1-1) of a network quality range to which the first state 601 is adapted is greater than or equal to an upper limit (which may be represented by a threshold 1-2) of a network quality range to which the fourth state 604 is adapted, a lower limit (which may be represented by a threshold 2-1) of the network quality range to which the fourth state 604 is adapted is greater than or equal to an upper limit (which may be represented by a threshold 2-2) of a network quality range to which the second state 602 is adapted, and a lower limit (which may be represented by a threshold 3-1) of the network quality range to which the second state 602 is adapted is greater than or equal to an upper limit (which may be represented by a threshold 3-2) of a network quality range to which the third state 603 is adapted. In this way, the state sequence corresponding to the operating states may be formed.

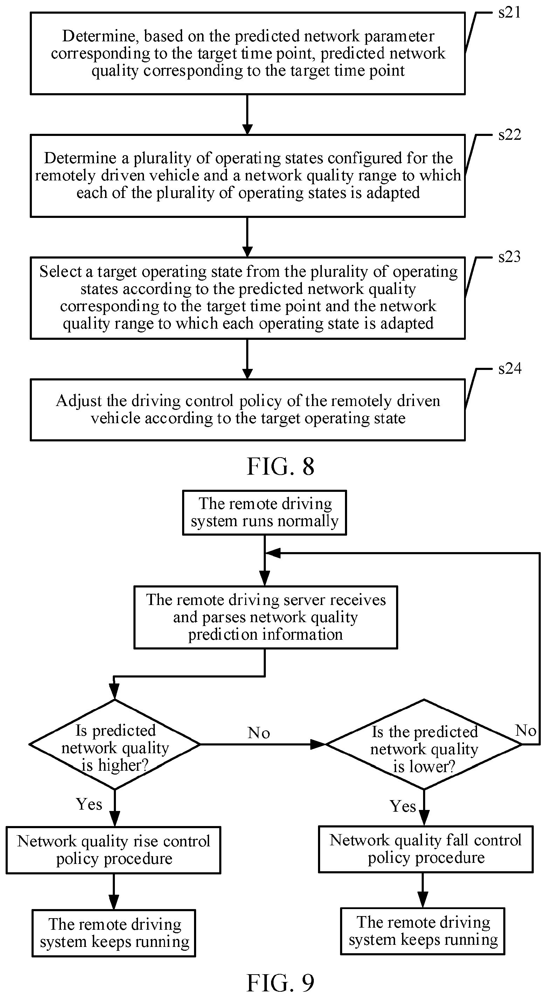

Based on the foregoing description, when performing operation S303, the remote driving server may specifically perform the following operations s21 to s24 shown in FIG. 8:
s21: Determine, based on the predicted network parameter corresponding to the target time point, predicted network quality corresponding to the target time point. For example, weighted summation may be performed on parameters in the predicted network parameter corresponding to the target time point, to obtain the predicted network quality corresponding to the target time point.
s22: Determine a plurality of operating states configured for the remotely driven vehicle and a network quality range to which each of the plurality of operating states is adapted.
s23: Select a target operating state from the plurality of operating states according to the predicted network quality corresponding to the target time point and the network quality range to which each operating state is adapted, a network quality range to which the target operating state is adapted including the predicted network quality corresponding to the target time point.

In an example, the remote driving server may directly match the predicted network quality corresponding to the target time point against the network quality range to which each operating state is adapted, to determine, according to a matching result, a network quality range to which the predicted network quality corresponding to the target time point belongs, and use an operating state corresponding to the determined network quality range as the target operating state.

According to the invention, given that there are generally two directions in which the network quality changes (one is a network quality rise direction and the other is a network quality fall direction), different state selection policies are set for different change directions. Accordingly, when operation s23 is performed, the target operating state is selected by using a corresponding state selection policy according to a network quality change direction corresponding to the target time point. A state selection policy corresponding to the network quality rise direction may be configured for indicating to sequentially compare, by starting from the first operating state in the state sequence, magnitudes between the predicted network quality corresponding to the target time point and a lower limit of the network quality range corresponding to each operating state, to select the target operating state. A state selection policy corresponding to the network quality fall direction may be configured for indicating to sequentially compare, by starting from the last operating state in the state sequence, magnitudes between the predicted network quality corresponding to the target time point and an upper limit of the network quality range corresponding to each operating state, to select the target operating state.

Based on this, when performing operation s23, the remote driving server determines according to the predicted network quality corresponding to the target time point and the current network parameter, a network quality change direction corresponding to the target time point. The current network quality is determined based on the current network parameter, and then the network quality change direction corresponding to the target time point is determined based on a difference between the predicted network quality corresponding to the target time point and the current network quality. The network quality change direction may be the network quality rise direction or the network quality fall direction. After determining the network quality change direction, the remote driving server determines based on a correspondence between a network quality change direction and a state selection policy, a state selection policy corresponding to the network quality change direction corresponding to the target time point as a target state selection policy. Then, the target operating state is selected from the plurality of operating states according to the target state selection policy based on the predicted network quality corresponding to the target time point and the network quality range to which each operating state is adapted.

If the network quality change direction corresponding to the target time point is the network quality rise direction, one implementation of selecting the target operating state from the plurality of operating states according to the target state selection policy based on the predicted network quality corresponding to the target time point and the network quality range to which each operating state is adapted may include the following: Each operating state in the state sequence is sequentially polled in an order that is the same as a sort order corresponding to the state sequence. Then, comparison may be performed to determine whether the predicted network quality corresponding to the target time point is greater than a lower limit of a network quality range to which a current polled operating state is adapted. If the predicted network quality corresponding to the target time point is greater than the lower limit of the network quality range to which the current polled operating state is adapted, the current polled operating state is selected as the target operating state, and the polling ends. If the predicted network quality corresponding to the target time point is not greater than the lower limit of the network quality range to which the current polled operating state is adapted, the state sequence continue to be polled. In an implementation, if the predicted network quality corresponding to the target time point is not greater than the lower limit of the network quality range to which the current polled operating state is adapted, the remote driving server may directly continue to poll the state sequence. In another implementation, if the predicted network quality corresponding to the target time point is not greater than the lower limit of the network quality range to which the current polled operating state is adapted, the remote driving server may first detect whether at least two operating states in the state sequence are not polled. The remote driving server may trigger the operation of continuing to poll the state sequence if at least two operating states in the state sequence are not polled. Otherwise, it can be determined according to the polling order that, the state sequence currently leaves only the last operating state unpolled. In this case, the last operating state may be directly selected as the target operating state and the polling ends. This can avoid wasting a processing resource to perform a series of polling operations on the last operating state.

If the network quality change direction corresponding to the target time point is the network quality fall direction, one implementation of selecting the target operating state from the plurality of operating states according to the target state selection policy based on the predicted network quality corresponding to the target time point and the network quality range to which each operating state is adapted may include the following: Each operating state in the state sequence is sequentially polled in an order opposite to the sort order corresponding to the state sequence. Then, comparison may be performed to determine whether the predicted network quality corresponding to the target time point is less than an upper limit of a network quality range to which a current polled operating state is adapted. If the predicted network quality corresponding to the target time point is less than the upper limit of the network quality range to which the current polled operating state is adapted, the current polled operating state is selected as the target operating state, and the polling ends. If the predicted network quality corresponding to the target time point is not less than the upper limit of the network quality range to which the current polled operating state is adapted, the state sequence continues to be polled. In an implementation, if the predicted network quality corresponding to the target time point is not less than the upper limit of the network quality range to which the current polled operating state is adapted, the remote driving server may directly continue to poll the state sequence. In another implementation, if the predicted network quality corresponding to the target time point is not less than the upper limit of the network quality range to which the current polled operating state is adapted, the remote driving server may first detect whether at least two operating states in the state sequence are not polled. The remote driving server may trigger the operation of continuing to poll the state sequence if at least two operating states in the state sequence are not polled. Otherwise, it can be determined according to the polling order that, the state sequence currently leaves only the first operating state unpolled. In this case, the first operating state may be directly selected as the target operating state and the polling ends. This can avoid wasting a processing resource to perform a series of polling operations on the first operating state.

s24: Adjust the driving control policy of the remotely driven vehicle according to the target operating state.

In one or more arrangements, if the target operating state is the first state or the second state, the remote driving server may output prompt information about the target operating state, to prompt the remote operation object (e.g., the remote driver) to adjust the vehicle control parameter of the remotely driven vehicle according to an indication of the target operating state. For example, the remote driving server may transmit the prompt information about the target operating state to the remote driving simulator, so that the remote driving simulator displays the prompt information about the target operating state on the screen. After the remote driver adjusts the vehicle control parameter according to the indication of the target operating state by operating the remote driving simulator, the remote driving server may obtain an adjusted vehicle control parameter. The remote driving simulator may generate a new control signal according to the adjusted vehicle control parameter, and the remote driving server may obtain the new control signal from the remote driving simulator, to obtain the adjusted vehicle control parameter by parsing the new control signal. After obtaining the adjusted vehicle control parameter, the remote driving server may adjust the driving control policy of the remotely driven vehicle according to the adjusted vehicle control parameter.

If the target operating state is the third state, the remote driving server may directly adjust the driving control policy of the remotely driven vehicle to a parking policy. Alternatively, the remote driving server may calculate an interval duration between the target time point and a current time point, the current time point being a time point corresponding to the current network parameter, that is, a time point at which the network quality prediction is performed. Then, a target duration required to control the remotely driven vehicle for safe parking may be determined, where safe parking refers to the remotely driven vehicle travelling from a current location at the current time point to a road safety area and parking in the road safety area. If the interval duration is greater than or equal to the target duration, the driving control policy of the remotely driven vehicle is adjusted to a safe parking policy, the safe parking policy being configured for indicating that the remotely driven vehicle is to travel to the road safety area for parking. If the interval duration is less than the target duration, the driving control policy of the remotely driven vehicle is adjusted to an emergency parking policy, the emergency parking policy being configured for indicating the remotely driven vehicle is to park at the current location.

In this embodiment of this application, the remotely driven vehicle is controlled based on predicted network quality to enter a corresponding operating state, so that the remote driver remotely controls the remotely driven vehicle under constraints of the operating state. This ensures safety of the remotely driven vehicle, and maximally ensures sustainable operation of the remote driving system, thereby improving stability and applicability of remote driving. A specific implementation of operation s24 is described above where the plurality of operating states include the first state, the second state, and the third state. Operation s24 may be adapted as the specific content of the plurality of operating states changes. For example, if the plurality of operating states include the first state, the second state, the third state, and the fourth state, the specific implementation of operation s24 may include the following: If the target operating state is any one of the plurality of operating states other than the third state, the remote driving server may adjust the driving control policy of the remotely driven vehicle by obtaining an adjusted vehicle control parameter.

As discussed in the descriptions of operations s21 to s24, it can be learned that in this embodiment of this application, a response judgment can be made from two dimensions of predicted network quality and a network quality change moment, which comprehensively considers various states of a predicted network quality change, thereby improving feasibility of the overall procedure. Moreover, threshold intervals are set for vehicle control parameter adjustment, which can help in avoiding frequent control policy switching due to fluctuations of the predicted network quality near a threshold, thereby improving stability of the system. In addition, in this embodiment of this application, a target operating state adapted to a network quality change direction is flexibly determined according to the network quality change direction (for a rise direction, polling is performed in a sort order of a state sequence; for a fall direction, polling is performed in an opposite order), which can improve efficiency in determining the target operating state, thereby improving efficiency in adjusting a driving control policy, and improving timeliness of control over the remotely driven vehicle.

The procedure shown in operations s21 to s24 merely describes an example implementation of operation S303, and is not limiting. For example, in another specific implementation, a table of correspondence between a network parameter and a driving control policy may be preset according to a service requirement. In this case, when performing operation S303, the remote driving server may find, in the correspondence table, a driving control policy corresponding to the predicted network parameter corresponding to the target time point, to replace a current driving control policy of the remotely driven vehicle with the found driving control policy.

In this embodiment of this application, network quality prediction information obtained by predicting network quality between a remotely driven vehicle and a remote driving server within a target time period may be obtained, and a target time point at which the network quality changes may be found from the target time period according to a predicted network parameter that is included in the network quality prediction information and that corresponds to each time point within the target time period and a current network parameter. Using this information, a driving control policy of the remotely driven vehicle is adjusted in advance based on a predicted network parameter corresponding to the target time point before the network quality between the remotely driven vehicle and the remote driving server changes. This can avoid a problem that information (such as vehicle control information or road environment information) is lost or delayed due to a sudden change in the network quality upon arrival at the target time point so that the remotely driven vehicle cannot be timely controlled at the target time point based on corresponding information. It can be learned that according to this embodiment of this application, travel safety of the remotely driven vehicle can be effectively improved.

Based on the foregoing method embodiment shown in FIG. 3, it can be learned that in the embodiments of this application, for the remote driving system, the cellular network in the remote driving system may first predict network quality within a future time and space based on a network parameter, a vehicle parameter, an environmental status, and the like, and then another device of the remote driving system adjusts a vehicle control parameter such as a control mode or a vehicle velocity according to predicted network quality within the future time and space and a plurality of preconfigured operating states, to meet a safe driving requirement, and avoid out-of-control and safety accidents due to a sudden change in the network quality. A specific process of how to achieve safe travel of the remotely driven vehicle by the remote driving system is described below, where the plurality of operating states includes the first state, the second state, and the third state.

First, the core network in the cellular network in the remote driving system may perform network quality prediction based on a network collected parameter (that is, a network parameter), a vehicle parameter, an environmental parameter, and output network quality prediction information within a target time period (such as several seconds to several minutes in the future). The network quality prediction information may be configured for determining a network quality change within the target time period. The network quality change may include two pieces of key information. One is a network quality change moment (that is, a target time point), and the other is a network parameter after network quality changes (that is, a predicted network parameter corresponding to the target time point). The network parameter may include uplink and downlink network bandwidth, network latency, reliability, and the like. For example, the network quality change determined based on the network quality prediction information may be configured for indicating that after T seconds, the network quality changes to bandwidth X Mbps, latency Y ms, and reliability Z%. The predicted network quality change moment may be greater than, equal to, or less than a time required for the remote driving system to respond. If the predicted network quality change moment is less than the time required, indicating that at the predicted network quality change moment, the remotely driven vehicle might not be able to complete an intended response, another response measure requiring less time is required, to ensure that a remote driving response is completed before the network quality changes.

Then, the remotely driven vehicle and the remote driving server in the remote driving system may obtain the network quality prediction information from the core network side in the cellular network, and determine the network quality change within the target time period based on the network quality prediction information, to adjust a driving control policy of the remotely driven vehicle according to the network quality change. That is, in the embodiments of this application, the remotely driven vehicle may adjust the driving control policy based on the network quality prediction information, or the remote driving server may adjust the driving control policy based on the network quality prediction information. A principle of the remotely driven vehicle adjusting the driving control policy according to the network quality prediction information is similar to a principle of the remote driving server adjusting the driving control policy according to the network quality prediction information. The following uses an example in which the remote driving server adjusts the driving control policy for description.

With reference to FIG. 9, after receiving and parsing the network quality prediction information from the core network, the remote driving server may compare, based on the network quality change, predicted network quality after the predicted network change (that is, predicted network quality corresponding to the target time point) with current network quality, to determine whether the predicted network quality is higher or lower than the current network quality. When the predicted network quality is higher, the remote driving server in the remote driving system may initiate a network quality rise control policy procedure. When the predicted network quality is lower, the remote driving server in the remote driving system may initiate a network quality fall control policy procedure. After the network quality rise/fall control policy procedure ends, the remote driving server may continue to determine network quality.

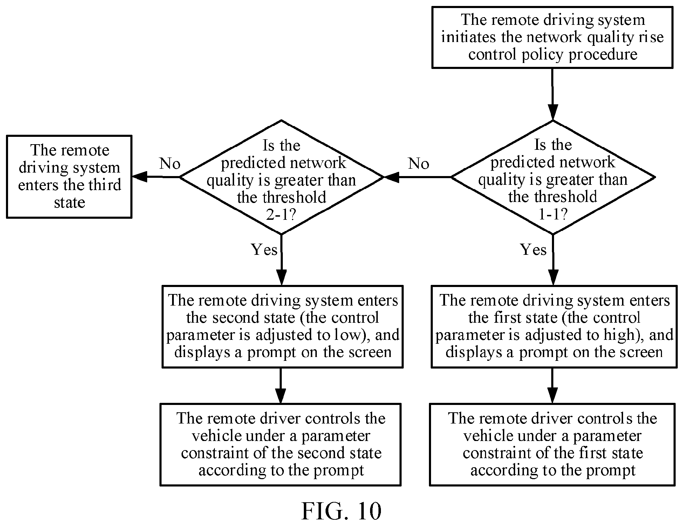

For the network quality rise control policy procedure, reference is made to FIG. 10. The remote driving server may first determine whether the predicted network quality is greater than the threshold 1-1 (that is, the lower limit of the network quality range corresponding to the first state). If the predicted network quality is greater than the threshold 1-1, the remote driving system enters the first state (the vehicle control parameter is a high indicator), and outputs prompt information about the first state on the screen, so that the remote driver controls the remotely driven vehicle under a parameter constraint of the first state according to the prompt information, to adjust the vehicle control parameter of the remotely driven vehicle, and the remote driving server can adjust the vehicle control policy according to an adjusted vehicle control parameter. If the predicted network quality is not greater than threshold 1-1, the remote driving system further determines whether the predicted network quality is greater than the threshold 2-1 (that is, the lower limit of the network quality range corresponding to the second state). If the predicted network quality is greater than the threshold 2-1, the remote driving system enters the second state (the vehicle control parameter is a low indicator), and outputs prompt information about the second state on the screen, so that the remote driver controls the remotely driven vehicle under a parameter constraint of the second state according to the prompt information, to adjust the vehicle control parameter of the remotely driven vehicle, and the remote driving server can adjust the vehicle control policy according to an adjusted vehicle control parameter. If the predicted network quality is not greater than threshold 2-1, the remote driving system may enter the third state (a parking procedure) to adjust the vehicle control policy.

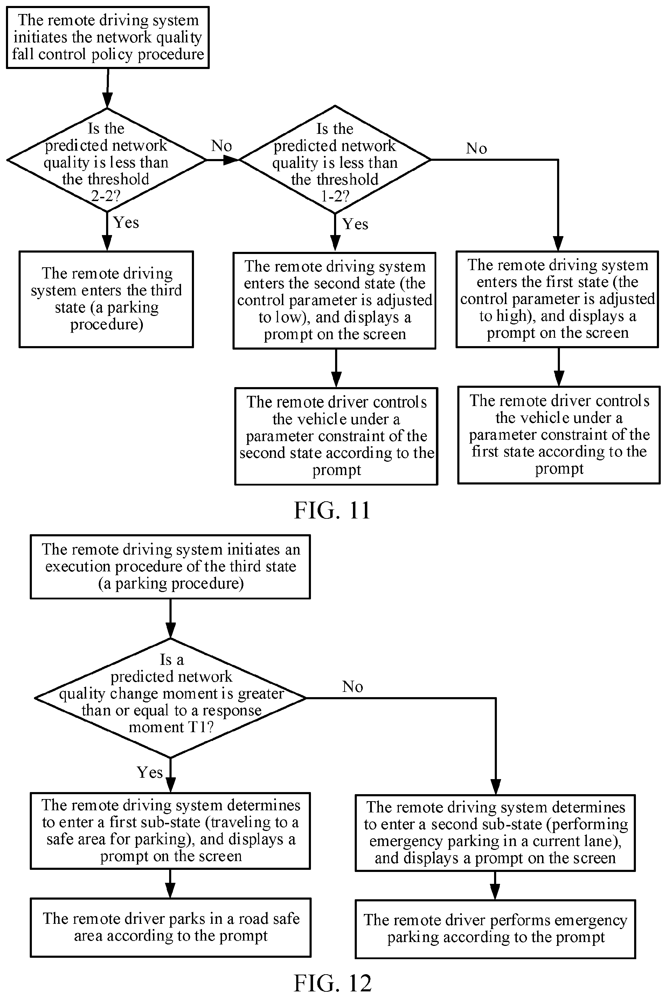

For the network quality fall control policy procedure, reference is made to FIG. 11. The remote driving server may first determine whether the predicted network quality is less than the threshold 2-2 (that is, the upper limit of the network quality range corresponding to the third state). If the predicted network quality is less than the threshold 2-2, the remote driving system enters the third state (a parking procedure) to adjust the vehicle control policy. If the predicted network quality is not less than the threshold 2-2, the remote driving system further determines whether the predicted network quality is less than the threshold 1-2 (that is, the upper limit of the network quality range corresponding to the second state). If the predicted network quality is less than the threshold 1-2, the remote driving system enters the second state (the vehicle control parameter is a low indicator), and outputs prompt information about the second state on the screen, so that the remote driver controls the remotely driven vehicle under a parameter constraint of the second state according to the prompt information, to adjust the vehicle control parameter of the remotely driven vehicle, and the remote driving server can adjust the vehicle control policy according to an adjusted vehicle control parameter. If the predicted network quality is not less than the threshold 1-2, the remote driving system may enter the first state (the vehicle control parameter is a high indicator), and outputs prompt information about the first state on the screen, so that the remote driver controls the remotely driven vehicle under a parameter constraint of the first state according to the prompt information, to adjust the vehicle control parameter of the remotely driven vehicle, and the remote driving server can adjust the vehicle control policy according to an adjusted vehicle control parameter.

In all embodiments of the present disclosure, the parking procedure corresponding to the third state may include two sub-states: In a first sub-state, the remote driving simulator prompts the driver to park in a road safety area (such as an emergency parking strip or an emergency parking area of a road). In a second sub-state, the remote driving simulator prompts the driver to perform emergency parking at a current location. It is assumed that a time required to complete the first sub-state is T1 seconds (that is, the target duration), that is, a response moment upon completion of the first sub-state is the (T1)^{th} second in the future; and the predicted network quality change moment is the (Tp)^{th} second in the future (that is, the target time point is the (Tp)^{th} second in the future). Then, after triggering the parking procedure corresponding to the third state, the remote driving server may further determine, according to the predicted network quality change moment (that is, the target time point), to initiate a corresponding sub-procedure. For example, FIG. 12 describes one possible procedure. It may be determined whether the network quality change moment Tp is greater than or equal to the response moment T1. If the network quality change moment Tp is greater than or equal to the response moment T1, the remote driving server determines that the remote driving system is to enter the first sub-state, and output prompt information about the first sub-state on the screen of the remote driving simulator, so that the remote driver can control, according to the prompt information, the remotely driven vehicle to travel to a road safety area for parking, thereby adjusting the driving control policy of the remotely driven vehicle. If the network quality change moment Tp is less than the response moment T1, the remote driving server determines that the remote driving system is to enter the second sub-state, and output prompt information about the second sub-state on the screen of the remote driving simulator, so that the remote driver can control, according to the prompt information, the remotely driven vehicle to perform emergency parking at a current location of a current lane, thereby adjusting the driving control policy of the remotely driven vehicle.

Based on the foregoing description, it can be learned that in the embodiments of this application, the remote driving system can respond based on network quality prediction information before network quality actually changes, which significantly helps to avoid an unsafe condition caused by delay/loss of a control instruction due to a sudden change in the network quality, thereby improving safety of remote driving. Moreover, a response that can be made by the remotely driven vehicle is determined based on predicted network quality at different levels, which ensures safety and maximally ensures sustainable operation of the system, thereby improving stability and applicability of the remote driving system.

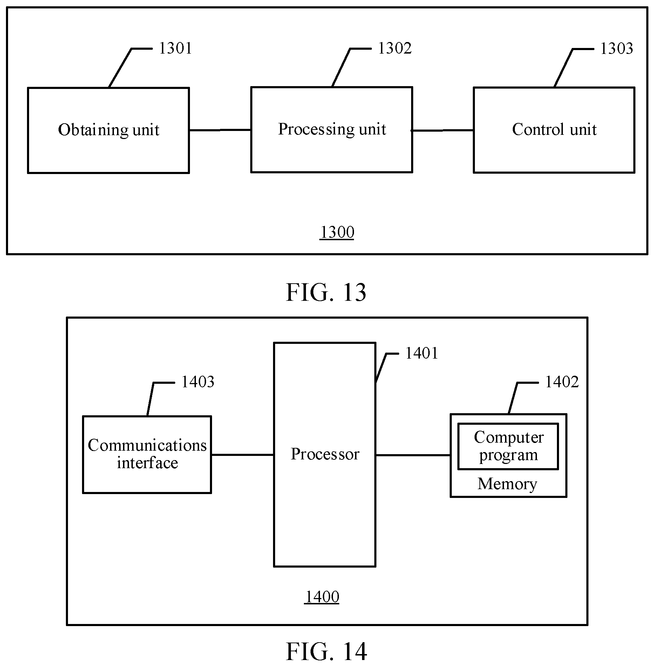

Based on related descriptions of the foregoing method embodiment, an embodiment of this application further discloses a remote driving control apparatus. The remote driving control apparatus may be a computer program (including program code) running in a computer device. With reference to FIG. 13, the remote driving control apparatus may execute the following units:
an obtaining unit 1301, configured to obtain network quality prediction information, the network quality prediction information being obtained by predicting network quality between a remotely driven vehicle and a remote driving server within a target time period, and the network quality prediction information including: a predicted network parameter corresponding to each time point within the target time period;
a processing unit 1302, configured to find, from the target time period according to the predicted network parameter corresponding to each time point within the target time period and a current network parameter between the remotely driven vehicle and the remote driving server, a target time point at which the network quality changes; and
a control unit 1303, configured to adjust a driving control policy of the remotely driven vehicle based on a predicted network parameter corresponding to the target time point, to control the remotely driven vehicle according to an adjusted driving control policy.

In one or more arrangements, when configured to adjust the driving control policy of the remotely driven vehicle based on the predicted network parameter corresponding to the target time point, the control unit 1303 may be configured to:
determine, based on the predicted network parameter corresponding to the target time point, predicted network quality corresponding to the target time point;
determine a plurality of operating states configured for the remotely driven vehicle and a network quality range to which each of the plurality of operating states is adapted;
select a target operating state from the plurality of operating states according to the predicted network quality corresponding to the target time point and the network quality range to which each operating state is adapted, a network quality range to which the target operating state is adapted including the predicted network quality corresponding to the target time point; and
adjust the driving control policy of the remotely driven vehicle according to the target operating state.

In another implementation, when configured to select the target operating state from the plurality of operating states according to the predicted network quality corresponding to the target time point and the network quality range to which each operating state is adapted, the control unit 1303 may be configured to:
determine, according to the predicted network quality corresponding to the target time point and the current network parameter, a network quality change direction corresponding to the target time point;
determine, based on a correspondence between a network quality change direction and a state selection policy, a state selection policy corresponding to the network quality change direction corresponding to the target time point as a target state selection policy; and
select the target operating state from the plurality of operating states according to the target state selection policy based on the predicted network quality corresponding to the target time point and the network quality range to which each operating state is adapted.

According to one or more aspects, the plurality of operating states form a state sequence, a lower limit of a network quality range to which an operating state in the state sequence is adapted being greater than or equal to an upper limit of a network quality range to which a next operating state is adapted;
the network quality change direction corresponding to the target time point is a network quality rise direction; and
correspondingly, when configured to select the target operating state from the plurality of operating states according to the target state selection policy based on the predicted network quality corresponding to the target time point and the network quality range to which each operating state is adapted, the control unit 1303 may be configured to:
   sequentially poll each operating state in the state sequence in an order that is the same as a sort order corresponding to the state sequence; and
   if the predicted network quality corresponding to the target time point is greater than a lower limit of a network quality range to which a current polled operating state is adapted, select the current polled operating state as the target operating state, and end the polling; or if the predicted network quality corresponding to the target time point is not greater than the lower limit of the network quality range to which the current polled operating state is adapted, continue to poll the state sequence.

According to additional aspects, the control unit 1303 is further configured to: when the predicted network quality corresponding to the target time point is not greater than the lower limit of the network quality range to which the current polled operating state is adapted, trigger the operation of continuing to poll the state sequence if at least two operating states in the state sequence are not polled; or select the last operating state as the target operating state, and end the polling.

The plurality of operating states form a state sequence, a lower limit of a network quality range to which an operating state in the state sequence is adapted being greater than or equal to an upper limit of a network quality range to which a next operating state is adapted;
the network quality change direction corresponding to the target time point is a network quality fall direction; and
correspondingly, when configured to select the target operating state from the plurality of operating states according to the target state selection policy based on the predicted network quality corresponding to the target time point and the network quality range to which each operating state is adapted, the control unit 1303 may be configured to:
   sequentially poll each operating state in the state sequence in an order opposite to a sort order corresponding to the state sequence; and
   if the predicted network quality corresponding to the target time point is less than an upper limit of a network quality range to which a current polled operating state is adapted, select the current polled operating state as the target operating state, and end the polling; or if the predicted network quality corresponding to the target time point is not less than the upper limit of the network quality range to which the current polled operating state is adapted, continue to poll the state sequence.

The control unit 1303 may be further configured to: when the predicted network quality corresponding to the target time point is not less than the upper limit of the network quality range to which the current polled operating state is adapted, continue to poll the state sequence if at least two operating states in the state sequence are not polled; or select the first operating state as the target operating state, and end the polling.

In another implementation, the plurality of operating states include: a first state, a second state, and a third state, a lower limit of a network quality range to which the first state is adapted being greater than or equal to an upper limit of a network quality range to which the second state is adapted, and a lower limit of the network quality range to which the second state is adapted being greater than or equal to an upper limit of a network quality range to which the third state is adapted;
the first state being configured for indicating that a vehicle control parameter for the remotely driven vehicle is allowed to adjust to a threshold, the second state being configured for indicating that the vehicle control parameter for the remotely driven vehicle is allowed to adjust to a limit, the limit being less than the threshold, and the third state being configured for indicating to control the remotely driven vehicle to park.

In some arrangements, when configured to adjust the driving control policy of the remotely driven vehicle according to the target operating state, the control unit 1303 may be configured to:
if the target operating state is the first state or the second state, output prompt information about the target operating state, to prompt a remote operation object to adjust the vehicle control parameter of the remotely driven vehicle according to indication of the target operating state; and
obtain an adjusted vehicle control parameter, and adjust the driving control policy of the remotely driven vehicle according to the adjusted vehicle control parameter.

Additionally or alternatively, when configured to adjust the driving control policy of the remotely driven vehicle according to the target operating state, the control unit 1303 may be configured to:
if the target operating state is the third state, calculate an interval duration between the target time point and a current time point, the current time point being a time point corresponding to the current network parameter;
determine a target duration required to control the remotely driven vehicle for safe parking, the safe parking meaning that the remotely driven vehicle travels from a current location at the current time point to a road safety area and parks in the road safety area; and
if the interval duration is greater than or equal to the target duration, adjust the driving control policy of the remotely driven vehicle to a safe parking policy, the safe parking policy being configured for indicating the remotely driven vehicle to travel to the road safety area for parking; or
if the interval duration is less than the target duration, adjust the driving control policy of the remotely driven vehicle to an emergency parking policy, the emergency parking policy being configured for indicating the remotely driven vehicle to park at the current location.

The obtaining unit 1301 may be further configured to:
obtain status information, the status information including: a network parameter obtained by performing network collection at each location in a target area in which the remotely driven vehicle is located and a vehicle parameter of the remotely driven vehicle, the vehicle parameter including at least a travel status parameter;
predict, in a spatial dimension according to the travel status parameter of the remotely driven vehicle, a location of the remotely driven vehicle in the target area upon arrival at each time point within the target time period, to obtain a plurality of predicted locations, one predicted location being corresponding to one time point; and
obtain, from the status information, a network parameter corresponding to each predicted location, and predict network quality at each predicted location at a corresponding time point according to the network parameter corresponding to each predicted location, to obtain the network quality prediction information.

In another implementation, the status information further includes: a vehicle parameter of another vehicle other than the remotely driven vehicle in the target area and an environmental parameter of the target area; and the obtaining unit 1301 may be further configured to: for any predicted location, predict network quality at the any predicted location at a corresponding time point according to a vehicle parameter of each vehicle, the environmental parameter, and a network parameter corresponding to the any predicted location that are in the status information.

According to another embodiment of this application, a part or all of the units of the remote driving control apparatus shown in FIG. 13 may be combined into one or more other units, or one (or more) of the units may be divided into a plurality of smaller functional units. In this way, the same operations can be implemented without affecting the implementation of technical effects of the embodiments of this application. The foregoing units are divided based on logical functions. In some arrangements, a function of one unit may be implemented by a plurality of units, or functions of a plurality of units are implemented by one unit. In another embodiment of this application, the remote driving control apparatus may further include another unit. In actual application, these functions may alternatively be cooperatively implemented by another unit, and may be cooperatively implemented by a plurality of units.

According to another embodiment of this application, a computer program (including program code) that can perform operations of the remote driving control method may be run on a general computing device, for example, a computer, including a processing element and a storage element such as a central processing unit (CPU), a random access memory (RAM), and a read-only memory (ROM), to construct the remote driving control apparatus shown in FIG. 13, and implement the remote driving control methods and processes described herein. The computer program may be recorded in, for example, a computer-readable recording medium, and may be loaded into the computing device through the computer-readable recording medium, and run in the computing device.

In the embodiments of this application, network quality prediction information obtained by predicting network quality between a remotely driven vehicle and a remote driving server within a target time period may be obtained, and a target time point at which the network quality changes may be found from the target time period according to a predicted network parameter that is included in the network quality prediction information and that corresponds to each time point within the target time period and a current network parameter, to adjust in advance a driving control policy of the remotely driven vehicle based on a predicted network parameter corresponding to the target time point before the network quality between the remotely driven vehicle and the remote driving server changes. This can avoid a problem that information (such as vehicle control information or road environment information) is lost or delayed due to a sudden change in the network quality upon arrival at the target time point so that the remotely driven vehicle cannot be timely controlled at the target time point based on corresponding information. Accordingly, travel safety of the remotely driven vehicle can be effectively improved.

Based on the descriptions of the foregoing method embodiment and apparatus embodiment, an embodiment of this application further provides a computer device. The computer device may be the remotely driven vehicle or the remote driving server in the remote driving system. With reference to FIG. 14, the computer device includes at least a processor 1401, a memory 1402, and a communications interface 1403. The communications interface 1403 may be configured for the computer device to communicate with another device for data transmission. The memory 1402 is configured to store a computer program. The processor 1401 (which may be referred to as a CPU), as a computing core and a control core of the computer device, may be configured to invoke the computer program stored in the memory 1402 to implement the remote driving control method. For example, the processor 1401 may be configured to invoke the computer program stored in the memory 1402 to perform the following operations: obtaining network quality prediction information, the network quality prediction information being obtained by predicting network quality between a remotely driven vehicle and a remote driving server within a target time period, and the network quality prediction information including: a predicted network parameter corresponding to each time point within the target time period; finding, from the target time period according to the predicted network parameter corresponding to each time point within the target time period and a current network parameter between the remotely driven vehicle and the remote driving server, a target time point at which the network quality changes; and adjusting a driving control policy of the remotely driven vehicle based on a predicted network parameter corresponding to the target time point, to control the remotely driven vehicle according to an adjusted driving control policy, and so on.

An embodiment of this application further provides a computer-readable storage medium (memory). The computer-readable storage medium is a memory device in a computer device, and is configured to store programs and data. The computer-readable storage medium herein may include an internal storage medium in the computer device, and may also include an extended storage medium supported by the computer device. The computer-readable storage medium provides a storage space, the storage space storing an operating system of the computer device. Moreover, the storage space further stores one or more instructions loaded and executed by a processor. The one or more instructions may be one or more computer programs (including program code). The computer-readable storage medium herein may be a high-speed RAM memory, or may be a non-volatile memory, for example, at least one magnetic disk storage, or may be at least one computer-readable storage medium located far away from the processor.

In all embodiments of the present disclosure, the computer program stored in the computer-readable storage medium may be loaded and executed by the processor to implement corresponding operations of the remote driving control methods and processes described herein. For example, in a specific implementation, the computer program in the computer-readable storage medium is loaded and executed by the processor to perform the following operations:
obtaining network quality prediction information, the network quality prediction information being obtained by predicting network quality between a remotely driven vehicle and a remote driving server within a target time period, and the network quality prediction information including: a predicted network parameter corresponding to each time point within the target time period;
finding, from the target time period according to the predicted network parameter corresponding to each time point within the target time period and a current network parameter between the remotely driven vehicle and the remote driving server, a target time point at which the network quality changes; and
adjusting a driving control policy of the remotely driven vehicle based on a predicted network parameter corresponding to the target time point, to control the remotely driven vehicle according to an adjusted driving control policy.

The foregoing lists the operations that may be performed by the computer program in the computer-readable storage medium, and is merely exemplary rather than exhaustive. The computer program may alternatively be loaded and executed by the processor to perform the operations performed by the units in the apparatus embodiment shown in FIG. 13. Details are not described herein.

An embodiment of this application further provides a computer program product, including a computer program, the computer program being stored in a computer-readable storage medium. A processor of a computer device reads the computer program from the computer-readable storage medium, and the processor executes the computer program, to cause the computer device to perform of the remote driving control methods and processes described herein.

Information (including but not limited to device information, personal information, and the like of an object), data (including but not limited to data for analysis, stored data, presented data, and the like), and signals in this application are all authorized by the object or fully authorized by various parties, and acquisition, use, and processing of related data need to comply with related laws, regulations, and standards of related countries and regions. For example, network parameters, operating states, driving control policies, road environments, and the like in this application are obtained with full authorization.

The term "a/the plurality of" as used herein means two or more than two. The term "and/or" describes an association relationship between associated objects and represents that three relationships may exist. For example, A and/or B may represent the following three cases: Only A exists, both A and B exist, and only B exists. The character "/" generally indicates an "or" relationship between associated objects. In addition, the operation numbers described in this specification merely exemplarily show a possible execution order of the operations. In some other embodiments, the operations may alternatively not be performed in the number order. For example, two operations with different numbers may be performed simultaneously, or two operations with different numbers may be performed in an order opposite to the order shown in the figure. This is not limited in the embodiments of this application.

## Claims

1. A remote driving control method, executable by a computer device, the method comprising:
obtaining (S301) network quality prediction information, the network quality prediction information being obtained by predicting network quality between a remotely driven vehicle and a remote driving server within a target time period, and the network quality prediction information comprising a predicted network parameter corresponding to each time point within the target time period;
determining (S302), from the target time period according to the predicted network parameter corresponding to each time point within the target time period and a current network parameter between the remotely driven vehicle and the remote driving server, a target time point at which a predicted network quality changes; and
adjusting (S303) a driving control policy of the remotely driven vehicle based on a predicted network parameter corresponding to the target time point, to control the remotely driven vehicle according to the adjusted driving control policy,
wherein the adjusting a driving control policy of the remotely driven vehicle based on a predicted network parameter corresponding to the target time point comprises:
determining, based on the predicted network parameter corresponding to the target time point, predicted network quality corresponding to the target time point;
determining a plurality of operating states configured for the remotely driven vehicle and a network quality range to which each of the plurality of operating states is adapted;
selecting a target operating state from the plurality of operating states according to the predicted network quality corresponding to the target time point and the network quality range to which each operating state is adapted, a network quality range to which the target operating state is adapted comprising the predicted network quality corresponding to the target time point; and
adjusting the driving control policy of the remotely driven vehicle according to the target operating state,
the method being **characterised in that**
the selecting a target operating state from the plurality of operating states according to the predicted network quality corresponding to the target time point and the network quality range to which each operating state is adapted comprises:
determining, according to the predicted network quality corresponding to the target time point and the current network parameter, a network quality change direction corresponding to the target time point;
determining, based on a correspondence between a network quality change direction and a state selection policy, a state selection policy corresponding to the network quality change direction corresponding to the target time point as a target state selection policy; and
selecting the target operating state from the plurality of operating states according to the target state selection policy based on the predicted network quality corresponding to the target time point and the network quality range to which each operating state is adapted.

2. The method according to claim 1, wherein the plurality of operating states form a state sequence, a lower limit of a network quality range to which an operating state in the state sequence is adapted being greater than or equal to an upper limit of a network quality range to which a next operating state is adapted;
the network quality change direction corresponding to the target time point is a network quality rise direction; and
the selecting the target operating state from the plurality of operating states according to the target state selection policy based on the predicted network quality corresponding to the target time point and the network quality range to which each operating state is adapted comprises:
sequentially polling each operating state in the state sequence in an order the same as a sort order corresponding to the state sequence; and
if the predicted network quality corresponding to the target time point is greater than a lower limit of a network quality range to which a current polled operating state is adapted, selecting the current polled operating state as the target operating state, and ending the polling; or
if the predicted network quality corresponding to the target time point is not greater than the lower limit of the network quality range to which the current polled operating state is adapted, continuing to poll the state sequence.

3. The method according to claim 2, wherein the method further comprises:
when the predicted network quality corresponding to the target time point is not greater than the lower limit of the network quality range to which the current polled operating state is adapted, triggering the operation of continuing to poll the state sequence if at least two operating states in the state sequence are not polled; or selecting the last operating state as the target operating state, and ending the polling.

4. The method according to claim 1, wherein the plurality of operating states form a state sequence, a lower limit of a network quality range to which an operating state in the state sequence is adapted being greater than or equal to an upper limit of a network quality range to which a next operating state is adapted;
the network quality change direction corresponding to the target time point is a network quality fall direction; and
the selecting the target operating state from the plurality of operating states according to the target state selection policy based on the predicted network quality corresponding to the target time point and the network quality range to which each operating state is adapted comprises:
sequentially polling each operating state in the state sequence in an order opposite to a sort order corresponding to the state sequence; and
if the predicted network quality corresponding to the target time point is less than an upper limit of a network quality range to which a current polled operating state is adapted, selecting the current polled operating state as the target operating state, and ending the polling; or if the predicted network quality corresponding to the target time point is not less than the upper limit of the network quality range to which the current polled operating state is adapted, continuing to poll the state sequence.

5. The method according to claim 4, wherein the method further comprises:
when the predicted network quality corresponding to the target time point is not less than the upper limit of the network quality range to which the current polled operating state is adapted, continuing to poll the state sequence if at least two operating states in the state sequence are not polled; or selecting a first operating state that has not been polled as the target operating state, and ending the polling.

6. The method according to any one of claims 1 to 5, wherein the plurality of operating states comprise: a first state, a second state, and a third state, a lower limit of a network quality range to which the first state is adapted being greater than or equal to an upper limit of a network quality range to which the second state is adapted, and a lower limit of the network quality range to which the second state is adapted being greater than or equal to an upper limit of a network quality range to which the third state is adapted;
the first state being configured for indicating that a vehicle control parameter for the remotely driven vehicle is allowed to adjust to a threshold, the second state being configured for indicating that the vehicle control parameter for the remotely driven vehicle is allowed to adjust to a limit, the limit being less than the threshold, and the third state being configured for indicating to control the remotely driven vehicle to park.

7. The method according to claim 6, wherein the adjusting the driving control policy of the remotely driven vehicle according to the target operating state comprises:
if the target operating state is the first state or the second state, outputting prompt information about the target operating state, to prompt a remote operation object to adjust the vehicle control parameter of the remotely driven vehicle according to indication of the target operating state; and
obtaining an adjusted vehicle control parameter, and adjusting the driving control policy of the remotely driven vehicle according to the adjusted vehicle control parameter.

8. The method according to claim 7, wherein the adjusting the driving control policy of the remotely driven vehicle according to the target operating state comprises:
if the target operating state is the third state, calculating an interval duration between the target time point and a current time point, the current time point being a time point corresponding to the current network parameter;
determining a target duration required to control the remotely driven vehicle for safe parking, the safe parking meaning that the remotely driven vehicle travels from a current location at the current time point to a road safety area and parks in the road safety area; and
if the interval duration is greater than or equal to the target duration, adjusting the driving control policy of the remotely driven vehicle to a safe parking policy, the safe parking policy being configured for indicating the remotely driven vehicle to travel to the road safety area for parking; or
if the interval duration is less than the target duration, adjusting the driving control policy of the remotely driven vehicle to an emergency parking policy, the emergency parking policy being configured for indicating the remotely driven vehicle to park at the current location.

9. The method according to claim 1, wherein the obtaining network quality prediction information comprises:
obtaining status information, the status information comprising: a network parameter obtained by performing network collection at each location in a target area in which the remotely driven vehicle is located and a vehicle parameter of the remotely driven vehicle, the vehicle parameter comprising a travel status parameter;
predicting, in a spatial dimension according to the travel status parameter of the remotely driven vehicle, a location of the remotely driven vehicle in the target area upon arrival at each time point within the target time period, to obtain a plurality of predicted locations, one predicted location being corresponding to one time point; and
obtaining, from the status information, a network parameter corresponding to each predicted location, and predicting network quality at each predicted location at a corresponding time point according to the network parameter corresponding to each predicted location, to obtain the network quality prediction information.

10. The method according to claim 9, wherein the status information further comprises: a vehicle parameter of another vehicle other than the remotely driven vehicle in the target area and an environmental parameter of the target area; and
the predicting network quality at each predicted location at a corresponding time point according to the network parameter corresponding to each predicted location comprises:
for any predicted location, predicting network quality at the any predicted location at a corresponding time point according to a vehicle parameter of each vehicle, the environmental parameter, and a network parameter corresponding to the any predicted location that are in the status information.

11. A computer device, comprising: a processor and a memory,
the memory being configured to store a computer program; and
the processor being configured to invoke the computer program stored in the memory, to implement the remote driving control method according to any one of claims 1 to 10.

12. A computer-readable storage medium, having a computer program stored therein, the computer program being loaded and executed by a processor to implement the remote driving control method according to any one of claims 1 to 10.

13. A computer program product, comprising a computer program, the computer program being stored in a computer-readable storage medium, a processor of a computer device reading the computer program from the computer-readable storage medium, and the processor executing the computer program, to cause the computer device to perform the remote driving control method according to any one of claims 1 to 10.

## Patentansprüche

1. Fernfahrsteuerungsverfahren, das von einer Computervorrichtung ausführbar ist, wobei das Verfahren umfasst:
Erhalten (S301) von Netzwerkqualitätsvorhersageinformation, wobei die Netzwerkqualitätsvorhersageinformation durch Vorhersagen von Netzwerkqualität zwischen einem ferngesteuerten Fahrzeug und einem Fernfahrserver innerhalb einer Zielzeitperiode erhalten wird, und wobei die Netzwerkqualitätsvorhersageinformation einen vorhergesagten Netzwerkparameter, der jedem Zeitpunkt innerhalb der Zielzeitperiode entspricht, umfasst;
Bestimmen (S302), aus der Zielzeitperiode gemäß dem vorhergesagten Netzwerkparameter, der jedem Zeitpunkt innerhalb der Zielzeitperiode entspricht, und einem aktuellen Netzwerkparameter zwischen dem ferngesteuerten Fahrzeug und dem Fernfahrserver, eines Zielzeitpunkts, zu dem sich eine vorhergesagte Netzwerkqualität ändert; und
Anpassen (S303) einer Fahrsteuerungsrichtlinie des ferngesteuerten Fahrzeugs basierend auf einem vorhergesagten Netzwerkparameter, der dem Zielzeitpunkt entspricht, um das ferngesteuerte Fahrzeug gemäß der angepassten Fahrsteuerungsrichtlinie zu steuern,
wobei das Anpassen einer Fahrsteuerungsrichtlinie des ferngesteuerten Fahrzeugs basierend auf einem vorhergesagten Netzwerkparameter, der dem Zielzeitpunkt entspricht, umfasst:
Bestimmen, basierend auf dem vorhergesagten Netzwerkparameter, der dem Zielzeitpunkt entspricht, von vorhergesagter Netzwerkqualität, die dem Zielzeitpunkt entspricht;
Bestimmen einer Vielzahl von Betriebszuständen, die für das ferngesteuerte Fahrzeug konfiguriert sind, und eines Netzwerkqualitätsbereichs, an den jeder der Vielzahl von Betriebszuständen angepasst ist;
Auswählen eines Zielbetriebszustands aus der Vielzahl von Betriebszuständen gemäß der vorhergesagten Netzwerkqualität, die dem Zielzeitpunkt entspricht, und dem Netzwerkqualitätsbereich, an den jeder Betriebszustand angepasst ist, wobei ein Netzwerkqualitätsbereich, an den der Zielbetriebszustand angepasst ist, die vorhergesagte Netzwerkqualität, die dem Zielzeitpunkt entspricht, umfasst; und
Anpassen der Fahrsteuerungsrichtlinie des ferngesteuerten Fahrzeugs gemäß dem Zielbetriebszustand,
wobei das Verfahren **dadurch gekennzeichnet ist, dass** das Auswählen eines Zielbetriebszustands aus der Vielzahl von Betriebszuständen gemäß der vorhergesagten Netzwerkqualität, die dem Zielzeitpunkt entspricht, und dem Netzwerkqualitätsbereich, an den jeder Betriebszustand angepasst ist, umfasst:
Bestimmen, gemäß der vorhergesagten Netzwerkqualität, die dem Zielzeitpunkt entspricht, und dem aktuellen Netzwerkparameter, einer Netzwerkqualitätsänderungsrichtung, die dem Zielzeitpunkt entspricht;
Bestimmen, basierend auf einer Zuordnung zwischen einer Netzwerkqualitätsänderungsrichtung und einer Zustandsauswahlrichtlinie, einer Zustandsauswahlrichtlinie, die der Netzwerkqualitätsänderungsrichtung entspricht, die dem Zielzeitpunkt entspricht, als eine Zielzustandsauswahlrichtlinie; und
Auswählen des Zielbetriebszustands aus der Vielzahl von Betriebszuständen gemäß der Zielzustandsauswahlrichtlinie basierend auf der vorhergesagten Netzwerkqualität, die dem Zielzeitpunkt entspricht, und dem Netzwerkqualitätsbereich, an den jeder Betriebszustand angepasst ist.

2. Verfahren nach Anspruch 1, wobei die Vielzahl von Betriebszuständen eine Zustandssequenz bildet, wobei eine untere Grenze eines Netzwerkqualitätsbereichs, an den ein Betriebszustand in der Zustandssequenz angepasst ist, größer als oder gleich einer oberen Grenze eines Netzwerkqualitätsbereichs ist, an den ein nächster Betriebszustand angepasst ist;
die Netzwerkqualitätsänderungsrichtung, die dem Zielzeitpunkt entspricht, eine Netzwerkqualitätsanstiegsrichtung ist; und
das Auswählen des Zielbetriebszustands aus der Vielzahl von Betriebszuständen gemäß der Zielzustandsauswahlrichtlinie basierend auf der vorhergesagten Netzwerkqualität, die dem Zielzeitpunkt entspricht, und dem Netzwerkqualitätsbereich, an den jeder Betriebszustand angepasst ist, umfasst:
sequentielles Abfragen jedes Betriebszustands in der Zustandssequenz in einer Reihenfolge, die gleich einer Sortierreihenfolge ist, die der Zustandssequenz entspricht; und
wenn die vorhergesagte Netzwerkqualität, die dem Zielzeitpunkt entspricht, größer als eine untere Grenze eines Netzwerkqualitätsbereichs ist, an den ein aktuell abgefragter Betriebszustand angepasst ist, Auswählen des aktuell abgefragten Betriebszustands als den Zielbetriebszustand und Beenden des Abfragens; oder
wenn die vorhergesagte Netzwerkqualität, die dem Zielzeitpunkt entspricht, nicht größer als die untere Grenze des Netzwerkqualitätsbereichs ist, an den der aktuell abgefragte Betriebszustand angepasst ist, Fortsetzen des Abfragens der Zustandssequenz.

3. Verfahren nach Anspruch 2, wobei das Verfahren ferner umfasst:
wenn die vorhergesagte Netzwerkqualität, die dem Zielzeitpunkt entspricht, nicht größer als die untere Grenze des Netzwerkqualitätsbereichs ist, an den der aktuell abgefragte Betriebszustand angepasst ist, Auslösen der Operation des Fortsetzens des Abfragens der Zustandssequenz, wenn mindestens zwei Betriebszustände in der Zustandssequenz nicht abgefragt sind; oder Auswählen des letzten Betriebszustands als den Zielbetriebszustand und Beenden des Abfragens.

4. Verfahren nach Anspruch 1, wobei die Vielzahl von Betriebszuständen eine Zustandssequenz bildet, wobei eine untere Grenze eines Netzwerkqualitätsbereichs, an den ein Betriebszustand in der Zustandssequenz angepasst ist, größer als oder gleich einer oberen Grenze eines Netzwerkqualitätsbereichs ist, an den ein nächster Betriebszustand angepasst ist;
die Netzwerkqualitätsänderungsrichtung, die dem Zielzeitpunkt entspricht, eine Netzwerkqualitätsabfallrichtung ist; und
das Auswählen des Zielbetriebszustands aus der Vielzahl von Betriebszuständen gemäß der Zielzustandsauswahlrichtlinie basierend auf der vorhergesagten Netzwerkqualität, die dem Zielzeitpunkt entspricht, und dem Netzwerkqualitätsbereich, an den jeder Betriebszustand angepasst ist, umfasst:
sequentielles Abfragen jedes Betriebszustands in der Zustandssequenz in einer Reihenfolge, die entgegengesetzt zu einer Sortierreihenfolge ist, die der Zustandssequenz entspricht; und
wenn die vorhergesagte Netzwerkqualität, die dem Zielzeitpunkt entspricht, kleiner als eine obere Grenze eines Netzwerkqualitätsbereichs ist, an den ein aktuell abgefragter Betriebszustand angepasst ist, Auswählen des aktuell abgefragten Betriebszustands als den Zielbetriebszustand und Beenden des Abfragens; oder wenn die vorhergesagte Netzwerkqualität, die dem Zielzeitpunkt entspricht, nicht kleiner als die obere Grenze des Netzwerkqualitätsbereichs ist, an den der aktuell abgefragte Betriebszustand angepasst ist, Fortsetzen des Abfragens der Zustandssequenz.

5. Verfahren nach Anspruch 4, wobei das Verfahren ferner umfasst:
wenn die vorhergesagte Netzwerkqualität, die dem Zielzeitpunkt entspricht, nicht kleiner als die obere Grenze des Netzwerkqualitätsbereichs ist, an den der aktuell abgefragte Betriebszustand angepasst ist, Fortsetzen des Abfragens der Zustandssequenz, wenn mindestens zwei Betriebszustände in der Zustandssequenz nicht abgefragt sind; oder Auswählen eines ersten Betriebszustands, der nicht abgefragt wurde, als den Zielbetriebszustand und Beenden des Abfragens.

6. Verfahren nach einem der Ansprüche 1 bis 5, wobei die Vielzahl von Betriebszuständen umfasst: einen ersten Zustand, einen zweiten Zustand und einen dritten Zustand, wobei eine untere Grenze eines Netzwerkqualitätsbereichs, an den der erste Zustand angepasst ist, größer als oder gleich einer oberen Grenze eines Netzwerkqualitätsbereichs ist, an den der zweite Zustand angepasst ist, und eine untere Grenze des Netzwerkqualitätsbereichs, an den der zweite Zustand angepasst ist, größer als oder gleich einer oberen Grenze eines Netzwerkqualitätsbereichs ist, an den der dritte Zustand angepasst ist;
wobei der erste Zustand dafür konfiguriert ist, anzuzeigen, dass ein Fahrzeugsteuerungsparameter für das ferngesteuerte Fahrzeug auf einen Schwellenwert angepasst werden darf, wobei der zweite Zustand dafür konfiguriert ist, anzuzeigen, dass der Fahrzeugsteuerungsparameter für das ferngesteuerte Fahrzeug auf einen Grenzwert angepasst werden darf, wobei der Grenzwert kleiner als der Schwellenwert ist, und wobei der dritte Zustand dafür konfiguriert ist, anzuzeigen, das ferngesteuerte Fahrzeug zu steuern, um zu parken.

7. Verfahren nach Anspruch 6, wobei das Anpassen der Fahrsteuerungsrichtlinie des ferngesteuerten Fahrzeugs gemäß dem Zielbetriebszustand umfasst:
wenn der Zielbetriebszustand der erste Zustand oder der zweite Zustand ist, Ausgeben von Hinweisinformation über den Zielbetriebszustand, um ein Fernbedienungsobjekt aufzufordern, den Fahrzeugsteuerungsparameter des ferngesteuerten Fahrzeugs gemäß Anzeige des Zielbetriebszustands anzupassen; und
Erhalten eines angepassten Fahrzeugsteuerungsparameters und Anpassen der Fahrsteuerungsrichtlinie des ferngesteuerten Fahrzeugs gemäß dem angepassten Fahrzeugsteuerungsparameter.

8. Verfahren nach Anspruch 7, wobei das Anpassen der Fahrsteuerungsrichtlinie des ferngesteuerten Fahrzeugs gemäß dem Zielbetriebszustand umfasst:
wenn der Zielbetriebszustand der dritte Zustand ist, Berechnen einer Intervalldauer zwischen dem Zielzeitpunkt und einem aktuellen Zeitpunkt, wobei der aktuelle Zeitpunkt ein Zeitpunkt ist, der dem aktuellen Netzwerkparameter entspricht;
Bestimmen einer Zieldauer, die erforderlich ist, um das ferngesteuerte Fahrzeug für sicheres Parken zu steuern, wobei das sichere Parken bedeutet, dass das ferngesteuerte Fahrzeug von einem aktuellen Standort zum aktuellen Zeitpunkt zu einem Straßensicherheitsbereich fährt und in dem Straßensicherheitsbereich parkt; und
wenn die Intervalldauer größer als oder gleich der Zieldauer ist, Anpassen der Fahrsteuerungsrichtlinie des ferngesteuerten Fahrzeugs auf eine sichere Parkrichtlinie, wobei die sichere Parkrichtlinie dafür konfiguriert ist, das ferngesteuerte Fahrzeug anzuweisen, zum Straßensicherheitsbereich zum Parken zu fahren; oder
wenn die Intervalldauer kleiner als die Zieldauer ist, Anpassen der Fahrsteuerungsrichtlinie des ferngesteuerten Fahrzeugs auf eine Notparkrichtlinie, wobei die Notparkrichtlinie dafür konfiguriert ist, das ferngesteuerte Fahrzeug anzuweisen, am aktuellen Standort zu parken.

9. Verfahren nach Anspruch 1, wobei das Erhalten von Netzwerkqualitätsvorhersageinformation umfasst:
Erhalten von Statusinformation, wobei die Statusinformation umfasst: einen Netzwerkparameter, der durch Durchführen von Netzwerkerfassung an jedem Standort in einem Zielgebiet, in dem sich das ferngesteuerte Fahrzeug befindet, erhalten wird, und einen Fahrzeugparameter des ferngesteuerten Fahrzeugs, wobei der Fahrzeugparameter einen Fahrstatusparameter umfasst;
Vorhersagen, in einer räumlichen Dimension gemäß dem Fahrstatusparameter des ferngesteuerten Fahrzeugs, eines Standorts des ferngesteuerten Fahrzeugs in dem Zielgebiet bei Ankunft zu jedem Zeitpunkt innerhalb der Zielzeitperiode, um eine Vielzahl von vorhergesagten Standorten zu erhalten, wobei ein vorhergesagter Standort einem Zeitpunkt entspricht; und
Erhalten, aus der Statusinformation, eines Netzwerkparameters, der jedem vorhergesagten Standort entspricht, und Vorhersagen von Netzwerkqualität an jedem vorhergesagten Standort zu einem entsprechenden Zeitpunkt gemäß dem Netzwerkparameter, der jedem vorhergesagten Standort entspricht, um die Netzwerkqualitätsvorhersageinformation zu erhalten.

10. Verfahren nach Anspruch 9, wobei die Statusinformation ferner umfasst: einen Fahrzeugparameter eines anderen Fahrzeugs als das ferngesteuerte Fahrzeug in dem Zielgebiet und einen Umgebungsparameter des Zielgebiets; und
das Vorhersagen von Netzwerkqualität an jedem vorhergesagten Standort zu einem entsprechenden Zeitpunkt gemäß dem Netzwerkparameter, der jedem vorhergesagten Standort entspricht, umfasst:
für jeden vorhergesagten Standort, Vorhersagen von Netzwerkqualität an dem jeweiligen vorhergesagten Standort zu einem entsprechenden Zeitpunkt gemäß einem Fahrzeugparameter jedes Fahrzeugs, dem Umgebungsparameter und einem Netzwerkparameter, der dem jeweiligen vorhergesagten Standort entspricht, die in der Statusinformation sind.

11. Computervorrichtung, umfassend: einen Prozessor und einen Speicher,
wobei der Speicher dafür konfiguriert ist, ein Computerprogramm zu speichern; und
wobei der Prozessor dafür konfiguriert ist, das in dem Speicher gespeicherte Computerprogramm aufzurufen, um das Fernfahrsteuerungsverfahren nach einem der Ansprüche 1 bis 10 zu implementieren.

12. Computerlesbares Speichermedium, das ein darin gespeichertes Computerprogramm aufweist, wobei das Computerprogramm von einem Prozessor geladen und ausgeführt wird, um das Fernfahrsteuerungsverfahren nach einem der Ansprüche 1 bis 10 zu implementieren.

13. Computerprogrammprodukt, umfassend ein Computerprogramm, wobei das Computerprogramm in einem computerlesbaren Speichermedium gespeichert ist, wobei ein Prozessor einer Computervorrichtung das Computerprogramm von dem computerlesbaren Speichermedium liest, und wobei der Prozessor das Computerprogramm ausführt, um die Computervorrichtung zu veranlassen, das Fernfahrsteuerungsverfahren nach einem der Ansprüche 1 bis 10 durchzuführen.

## Revendications

1. Procédé de commande de conduite à distance, exécutable par un dispositif informatique, le procédé comprenant :
l'obtention (S301) d'informations de prédiction de qualité de réseau, les informations de prédiction de qualité de réseau étant obtenues en prédisant la qualité de réseau entre un véhicule conduit à distance et un serveur de conduite à distance au cours d'une période de temps cible, et les informations de prédiction de qualité de réseau comprenant un paramètre de réseau prédit correspondant à chaque instant au cours de la période de temps cible ;
la détermination (S302), à partir de la période de temps cible selon le paramètre de réseau prédit correspondant à chaque instant au cours de la période de temps cible et un paramètre de réseau actuel entre le véhicule conduit à distance et le serveur de conduite à distance, d'un instant cible auquel une qualité de réseau prédite change ; et
l'ajustement (S303) d'une politique de commande de conduite du véhicule conduit à distance sur la base d'un paramètre de réseau prédit correspondant à l'instant cible, pour commander le véhicule conduit à distance selon la politique de commande de conduite ajustée,
dans lequel l'ajustement d'une politique de commande de conduite du véhicule conduit à distance sur la base d'un paramètre de réseau prédit correspondant à l'instant cible comprend :
la détermination, sur la base du paramètre de réseau prédit correspondant à l'instant cible, d'une qualité de réseau prédite correspondant à l'instant cible ;
la détermination d'une pluralité d'états de fonctionnement configurés pour le véhicule conduit à distance et d'une plage de qualité de réseau à laquelle chacun de la pluralité d'états de fonctionnement est adapté ;
la sélection d'un état de fonctionnement cible parmi la pluralité d'états de fonctionnement selon la qualité de réseau prédite correspondant à l'instant cible et la plage de qualité de réseau à laquelle chaque état de fonctionnement est adapté, une plage de qualité de réseau à laquelle l'état de fonctionnement cible est adapté comprenant la qualité de réseau prédite correspondant à l'instant cible ; et
l'ajustement de la politique de commande de conduite du véhicule conduit à distance selon l'état de fonctionnement cible,
le procédé étant **caractérisé en ce que** la sélection d'un état de fonctionnement cible parmi la pluralité d'états de fonctionnement selon la qualité de réseau prédite correspondant à l'instant cible et la plage de qualité de réseau à laquelle chaque état de fonctionnement est adapté comprend :
la détermination, selon la qualité de réseau prédite correspondant à l'instant cible et le paramètre de réseau actuel, d'une direction de changement de qualité de réseau correspondant à l'instant cible ;
la détermination, sur la base d'une correspondance entre une direction de changement de qualité de réseau et une politique de sélection d'état, d'une politique de sélection d'état correspondant à la direction de changement de qualité de réseau correspondant à l'instant cible en tant que politique de sélection d'état cible ; et
la sélection de l'état de fonctionnement cible parmi la pluralité d'états de fonctionnement selon la politique de sélection d'état cible sur la base de la qualité de réseau prédite correspondant à l'instant cible et de la plage de qualité de réseau à laquelle chaque état de fonctionnement est adapté.

2. Procédé selon la revendication 1, dans lequel la pluralité d'états de fonctionnement forment une séquence d'états, une limite inférieure d'une plage de qualité de réseau à laquelle un état de fonctionnement dans la séquence d'états est adapté étant supérieure ou égale à une limite supérieure d'une plage de qualité de réseau à laquelle un état de fonctionnement suivant est adapté ;
la direction de changement de qualité de réseau correspondant à l'instant cible est une direction de hausse de qualité de réseau ; et
la sélection de l'état de fonctionnement cible parmi la pluralité d'états de fonctionnement selon la politique de sélection d'état cible sur la base de la qualité de réseau prédite correspondant à l'instant cible et de la plage de qualité de réseau à laquelle chaque état de fonctionnement est adapté comprend :
l'interrogation séquentielle de chaque état de fonctionnement dans la séquence d'états dans un ordre identique à un ordre de tri correspondant à la séquence d'états ; et
si la qualité de réseau prédite correspondant à l'instant cible est supérieure à une limite inférieure d'une plage de qualité de réseau à laquelle un état de fonctionnement actuellement interrogé est adapté, la sélection de l'état de fonctionnement actuellement interrogé en tant qu'état de fonctionnement cible, et la fin de l'interrogation ; ou
si la qualité de réseau prédite correspondant à l'instant cible n'est pas supérieure à la limite inférieure de la plage de qualité de réseau à laquelle l'état de fonctionnement actuellement interrogé est adapté, la poursuite de l'interrogation de la séquence d'états.

3. Procédé selon la revendication 2, dans lequel le procédé comprend en outre :
lorsque la qualité de réseau prédite correspondant à l'instant cible n'est pas supérieure à la limite inférieure de la plage de qualité de réseau à laquelle l'état de fonctionnement actuellement interrogé est adapté, le déclenchement de l'opération de poursuite de l'interrogation de la séquence d'états si au moins deux états de fonctionnement dans la séquence d'états ne sont pas interrogés ; ou la sélection du dernier état de fonctionnement en tant qu'état de fonctionnement cible, et la fin de l'interrogation.

4. Procédé selon la revendication 1, dans lequel la pluralité d'états de fonctionnement forment une séquence d'états, une limite inférieure d'une plage de qualité de réseau à laquelle un état de fonctionnement dans la séquence d'états est adapté étant supérieure ou égale à une limite supérieure d'une plage de qualité de réseau à laquelle un état de fonctionnement suivant est adapté ;
la direction de changement de qualité de réseau correspondant à l'instant cible est une direction de baisse de qualité de réseau ; et
la sélection de l'état de fonctionnement cible parmi la pluralité d'états de fonctionnement selon la politique de sélection d'état cible sur la base de la qualité de réseau prédite correspondant à l'instant cible et de la plage de qualité de réseau à laquelle chaque état de fonctionnement est adapté comprend :
l'interrogation séquentielle de chaque état de fonctionnement dans la séquence d'états dans un ordre opposé à un ordre de tri correspondant à la séquence d'états ; et
si la qualité de réseau prédite correspondant à l'instant cible est inférieure à une limite supérieure d'une plage de qualité de réseau à laquelle un état de fonctionnement actuellement interrogé est adapté, la sélection de l'état de fonctionnement actuellement interrogé en tant qu'état de fonctionnement cible, et la fin de l'interrogation ; ou si la qualité de réseau prédite correspondant à l'instant cible n'est pas inférieure à la limite supérieure de la plage de qualité de réseau à laquelle l'état de fonctionnement actuellement interrogé est adapté, la poursuite de l'interrogation de la séquence d'états.

5. Procédé selon la revendication 4, dans lequel le procédé comprend en outre :
lorsque la qualité de réseau prédite correspondant à l'instant cible n'est pas inférieure à la limite supérieure de la plage de qualité de réseau à laquelle l'état de fonctionnement actuellement interrogé est adapté, la poursuite de l'interrogation de la séquence d'états si au moins deux états de fonctionnement dans la séquence d'états ne sont pas interrogés ; ou la sélection d'un premier état de fonctionnement qui n'a pas été interrogé en tant qu'état de fonctionnement cible, et la fin de l'interrogation.

6. Procédé selon l'une quelconque des revendications 1 à 5, dans lequel la pluralité d'états de fonctionnement comprennent : un premier état, un deuxième état et un troisième état, une limite inférieure d'une plage de qualité de réseau à laquelle le premier état est adapté étant supérieure ou égale à une limite supérieure d'une plage de qualité de réseau à laquelle le deuxième état est adapté, et une limite inférieure de la plage de qualité de réseau à laquelle le deuxième état est adapté étant supérieure ou égale à une limite supérieure d'une plage de qualité de réseau à laquelle le troisième état est adapté ;
le premier état étant configuré pour indiquer qu'un paramètre de commande de véhicule pour le véhicule conduit à distance est autorisé à s'ajuster à un seuil, le deuxième état étant configuré pour indiquer que le paramètre de commande de véhicule pour le véhicule conduit à distance est autorisé à s'ajuster à une limite, la limite étant inférieure au seuil, et le troisième état étant configuré pour indiquer de commander le véhicule conduit à distance pour qu'il se gare.

7. Procédé selon la revendication 6, dans lequel l'ajustement de la politique de commande de conduite du véhicule conduit à distance selon l'état de fonctionnement cible comprend :
si l'état de fonctionnement cible est le premier état ou le deuxième état, l'émission d'informations d'invite concernant l'état de fonctionnement cible, pour inviter un objet d'opération à distance à ajuster le paramètre de commande de véhicule du véhicule conduit à distance selon l'indication de l'état de fonctionnement cible ; et
l'obtention d'un paramètre de commande de véhicule ajusté, et l'ajustement de la politique de commande de conduite du véhicule conduit à distance selon le paramètre de commande de véhicule ajusté.

8. Procédé selon la revendication 7, dans lequel l'ajustement de la politique de commande de conduite du véhicule conduit à distance selon l'état de fonctionnement cible comprend :
si l'état de fonctionnement cible est le troisième état, le calcul d'une durée d'intervalle entre l'instant cible et un instant actuel, l'instant actuel étant un instant correspondant au paramètre de réseau actuel ;
la détermination d'une durée cible requise pour commander le véhicule conduit à distance pour un stationnement sécurisé, le stationnement sécurisé signifiant que le véhicule conduit à distance se déplace depuis un emplacement actuel à l'instant actuel vers une zone de sécurité routière et se gare dans la zone de sécurité routière ; et
si la durée d'intervalle est supérieure ou égale à la durée cible, l'ajustement de la politique de commande de conduite du véhicule conduit à distance à une politique de stationnement sécurisé, la politique de stationnement sécurisé étant configurée pour indiquer au véhicule conduit à distance de se déplacer vers la zone de sécurité routière pour se garer ; ou
si la durée d'intervalle est inférieure à la durée cible, l'ajustement de la politique de commande de conduite du véhicule conduit à distance à une politique de stationnement d'urgence, la politique de stationnement d'urgence étant configurée pour indiquer au véhicule conduit à distance de se garer à l'emplacement actuel.

9. Procédé selon la revendication 1, dans lequel l'obtention d'informations de prédiction de qualité de réseau comprend :
l'obtention d'informations d'état, les informations d'état comprenant : un paramètre de réseau obtenu en effectuant une collecte de réseau à chaque emplacement dans une zone cible dans laquelle le véhicule conduit à distance est situé et un paramètre de véhicule du véhicule conduit à distance, le paramètre de véhicule comprenant un paramètre d'état de déplacement ;
la prédiction, dans une dimension spatiale selon le paramètre d'état de déplacement du véhicule conduit à distance, d'un emplacement du véhicule conduit à distance dans la zone cible à l'arrivée à chaque instant au cours de la période de temps cible, pour obtenir une pluralité d'emplacements prédits, un emplacement prédit correspondant à un instant ; et
l'obtention, à partir des informations d'état, d'un paramètre de réseau correspondant à chaque emplacement prédit, et la prédiction de la qualité de réseau à chaque emplacement prédit à un instant correspondant selon le paramètre de réseau correspondant à chaque emplacement prédit, pour obtenir les informations de prédiction de qualité de réseau.

10. Procédé selon la revendication 9, dans lequel les informations d'état comprennent en outre : un paramètre de véhicule d'un autre véhicule autre que le véhicule conduit à distance dans la zone cible et un paramètre environnemental de la zone cible ; et
la prédiction de la qualité de réseau à chaque emplacement prédit à un instant correspondant selon le paramètre de réseau correspondant à chaque emplacement prédit comprend :
pour tout emplacement prédit, la prédiction de la qualité de réseau audit emplacement prédit à un instant correspondant selon un paramètre de véhicule de chaque véhicule, le paramètre environnemental et un paramètre de réseau correspondant audit emplacement prédit qui sont dans les informations d'état.

11. Dispositif informatique, comprenant : un processeur et une mémoire,
la mémoire étant configurée pour stocker un programme informatique ; et
le processeur étant configuré pour invoquer le programme informatique stocké dans la mémoire, pour mettre en œuvre le procédé de commande de conduite à distance selon l'une quelconque des revendications 1 à 10.

12. Support de stockage lisible par ordinateur, ayant un programme informatique qui y est stocké, le programme informatique étant chargé et exécuté par un processeur pour mettre en œuvre le procédé de commande de conduite à distance selon l'une quelconque des revendications 1 à 10.

13. Produit-programme informatique, comprenant un programme informatique, le programme informatique étant stocké dans un support de stockage lisible par ordinateur, un processeur d'un dispositif informatique lisant le programme informatique à partir du support de stockage lisible par ordinateur, et le processeur exécutant le programme informatique, pour amener le dispositif informatique à exécuter le procédé de commande de conduite à distance selon l'une quelconque des revendications 1 à 10.
